# EUROPEAN PATENT APPLICATION

(11) **EP 1 450 325 A1**
(43) Date of publication of application: **25.08.2004**
(21) Application number: 01982728.6
(22) Date of filing: 01.11.2001
(51) Int. Cl.: G07G 1/14, G07G 1/12, G06F 17/60

(54) **POS SYSTEM, POS SERVER, SHOP TERMINAL, SALES MANAGING METHOD, AND RECORDING MEDIUM**

(71) Applicant: Kabushiki Kaisha Visual Japan, Tokyo 101-0051 (JP)
(72) Inventor: YAMADA, Tokuhiro; c/o K.K. VISUAL JAPAN, Chiyoda-ku, Tokyo 101-0051 (JP)
(74) Representative: Skuhra, Udo, Dipl.-Ing.
(86) International application number: PCT/JP2001/009601
(87) International publication number: WO 2003/038775

(57) **Abstract**

The present invention relates to provide a POS server which responds instantly to the request from local terminals. The POS server controls a plurality of local terminals arranged in a plurality of stores, having a first and second control apparatus which receive and store dealing information, from the first local terminal 300a respectively, which shows that products dealing was conducted in the first local terminal 300a among the plurality of local terminals, and notifies that the dealing information was received, to the first local terminal.

## Description

### TECHNICAL FIELD

This invention relates to a POS (Point Of Sales) server (point-of-sale server), a local terminal, a POS system, a sales control method, and a recording medium. Especially this invention relates to the POS server which controls sales of products in a plurality of stores, the local terminal linked to the POS server, the POS system equipped with the POS server and the local terminal, the sales control method, and the recording medium that stores the above-mentioned program.

### BACKGROUND ART

In the retail industries, such as convenience stores and supermarkets, the POS system is used for sales control. The local terminal connected to the POS server by LAN (Local Area Network) etc. is arranged in a store. In case of a plurality of stores like a chain store, one set of a POS server controls a plurality of local terminals arranged in different stores.

At a store, when selling products, a scanner is used for reading the price given to the products or the bar code printed or stuck on the package and a local terminal books the sales of the products.

Moreover, as a recent mainstream, regardless of the number of the local terminal arranged in the store, the POS server is prepared also in the store side, and the client-server performs the communication link with the host server of headquarters as a system.

However, huge cost is required in order to build the conventional POS system. Moreover, when the server is prepared in the local terminal side, maintenance of the local terminal will be needed.

Since it is uneconomical in cost to connect the POS server of a store with the host server of headquarters all day, the POS server transmits or receives data to/from the host server several times in a day. Therefore, since the timing of information transmission and reception is restricted, information on new products master and others cannot be transmitted and received to desired timing. Moreover, in order to build a host server which can communicate 1 to 1 from many local terminals at the same time, huge system investment is needed.

Then, this invention aims at offering the POS server which can solve the above-mentioned technical problem, the local terminal, the POS system, the sales control method, and the recording medium.
This purpose is attained by the combination of the features described in the independent terms in the claims. Moreover, the dependent claims specify the further advantageous example of this invention.

### DISCLOSURE OF THE INVENTION

According to the first embodiment of the present invention, the POS server which controls a plurality of local terminals arranged in a plurality of stores, having the first and second control apparatus which receive and store dealing information, from the first local terminal respectively, which shows that products dealing was conducted in the first local terminal among said plurality of local terminals, and notifies that said dealing information was received, to said first local terminal.

Said second control apparatus may provide said dealing information to said first control apparatus when said dealing information of said first local terminal was not stored correctly in said first control apparatus.

It may be provided with said third control apparatus which receives dealing information representing that products dealing has been made at second local terminal different from said first local terminal, stores the dealing information therein, and notifies said second local terminal that it has received the dealing information. Said second control apparatus may receive and store said dealing information on said second local terminal from said second local terminal further, and may notify that said dealing information was received, to said second local terminal.

When said dealing information on said second local terminal is not correctly stored in said third control apparatus, said second control apparatus may provide said dealing information to said third control apparatus.

Said second control apparatus may transmit said dealing information which said demand shows to said local terminal, when a demand of information about said dealing information other than the local terminal concerned is received from a predetermined local terminal among said plurality of local terminals.

It may be provided with said fourth control apparatus receiving and storing said dealing information on said first local terminal from said first local terminal, and notifying receiving said dealing information to said first local terminal and providing said first control apparatus with said dealing information when said dealing information of said first local terminal is not correctly stored in said first control apparatus. It may be provided with said fifth control apparatus receiving and storing said dealing information on said second local terminal from said second local terminal, and notifying receiving said dealing information to said second local terminal and providing said first control apparatus with said dealing information when said dealing information of said second local terminal is not correctly stored in said third control apparatus.

It may be provided with said fourth control apparatus which receives and stores said dealing information from each of said first local terminal and said second local terminal. Said fourth control apparatus may transmit said dealing information which said demand shows to said local terminal, when a demand of information about said dealing information other than the local terminal concerned is received from a predetermined local terminal among said plurality of local terminals.

Said first and second control apparatus may receive and store dealing information which shows that products dealing was conducted in said second local terminal among a plurality of local terminals, from said second local terminal respectively, and notify that said dealing information was received, to said second local terminal.

Said second control apparatus may provide said first control apparatus with said dealing information, when said dealing information on said first local terminal is not correctly stored in said first control apparatus. Said first control apparatus may provide said second control apparatus with said dealing information, when said dealing information on said second local terminal is not correctly stored in said second control apparatus.

It may be provided with said third and fourth control apparatus which have the same function as said first and second control apparatus arranged by receiving and storing dealing information which shows that products dealing was conducted in third and fourth local terminal of a plurality of local terminals. It may be provided with said fifth control apparatus which receives and stores said dealing information on said first local terminal at least one from among said first and second control apparatus, and receives and stores said dealing information on said second local terminal at least one from among said third and fourth control apparatus.

When a demand of information about said dealing information other than the local terminal concerned is received from a predetermined local terminal among said plurality of local terminals, said fifth control apparatus may transmit said dealing information which said demand shows to said local terminal.

It may be provided with said third and fourth control apparatus which have the same function as said first and second control apparatus arranged by receiving and storing dealing information which shows that products dealing was conducted in third and fourth local terminal of a plurality of local terminals. It may be provided with said fifth control apparatus which receives and stores said dealing information on said first local terminal at least one from among said first and second control apparatus, which receives and stores said dealing information on said second local terminal at least one from among said first and second control apparatus, which receives and stores said dealing information on said third local terminal at least one from among said third and fourth control apparatus, and which receives and stores said dealing information on said fourth local terminal at least one from among said third and fourth control apparatus.

When a demand of information about said dealing information other than the local terminal concerned is received from a predetermined local terminal among said plurality of local terminals, said fifth control apparatus may transmit information which said demand shows to said local terminal.

Said first control apparatus may transmit the main response information which makes said first local terminal recognize completion of said processing to said first local terminal, after processing said dealing information received from said first local terminal. Said second control apparatus may transmit a sub-response information which makes said first local terminal recognize having completed processing of said dealing information to said first local terminal, when said main response information is not transmitted to said first local terminal from said first control apparatus, after processing said dealing information received from said first local terminal.

Said first control apparatus may transmit the main response information which makes said first local terminal recognize completion of said processing to said first local terminal, after processing said dealing information received from said first local terminal. Said third control apparatus may transmit the main response information which makes said second local terminal recognize completion of said processing to said second local terminal, after processing said dealing information received from said second local terminal. Said second control apparatus may transmit a sub-response information which makes said first local terminal recognize having completed processing of said dealing information to said first local terminal, when said main response information is not transmitted to said first local terminal from said first control apparatus, after processing said dealing information received from said first local terminal, and transmit a sub-response information which makes said second local terminal recognize having completed processing of said dealing information to said second local terminal, when said main response information is not transmitted to said second local terminal from said third control apparatus, after processing said dealing information received from said second local terminal.

Said first control apparatus may transmit the main response information which makes said first local terminal recognize completion of said processing to said first local terminal, after processing said dealing information received from said first local terminal. Said fourth control apparatus may transmit a sub-response information which makes said first local terminal recognize having completed processing of said dealing information to said first local terminal, when said main response information is not transmitted to said first local terminal from said first control apparatus, after processing said dealing information received from said first local terminal. Said third control apparatus may transmit the main response information which makes said second local terminal recognize completion of said processing to said second local terminal, after processing said dealing information received from said second local terminal. Said fifth control apparatus may transmit a sub-response information which makes said second local terminal recognize having completed processing of said dealing information to said second local terminal, when said main response information is not transmitted to said second local terminal from said third control apparatus, after processing said dealing information received from said second local terminal.

Said first control apparatus may transmit the main response information which makes said first local terminal recognize completion of said processing to said first local terminal, after processing said dealing information received from said first local terminal. Said second control apparatus may transmit a sub-response information which makes said first local terminal recognize having completed processing of said dealing information to said first local terminal, when said main response information is not transmitted to said first local terminal from said first control apparatus, after processing said dealing information received from said first local terminal. Said second control apparatus may transmit a main response information which makes said second local terminal recognize completion of said processing to said second local terminal, after processing said dealing information received from said second local terminal. Said first control apparatus may transmit a sub-response information which makes said second local terminal recognize having completed processing of said dealing information to said second local terminal, when said main response information is not transmitted to said second local terminal from said second control apparatus, after processing said dealing information received from said second local terminal.

Said first control apparatus may transmit a main response information which makes said first local terminal recognize completion of said processing to said first local terminal, after processing said dealing information received from said first local terminal. Said second control apparatus may transmit a sub-response information which makes said first local terminal recognize having completed processing of said dealing information to said first local terminal, when said main response information is not transmitted to said first local terminal from said first control apparatus, after processing said dealing information received from said first local terminal. Said third control apparatus may transmit a main response information which makes said second local terminal recognize completion of said processing to said second local terminal, after processing said dealing information received from said second local terminal. Said fourth control apparatus may transmit a sub-response information which makes said second local terminal recognize having completed processing of said dealing information to said second local terminal, when said main response information is not transmitted to said second local terminal from said second control apparatus, after processing said dealing information received from said second local terminal.

In the second embodiment of the present invention, the local terminals connected to the POS server which controls sale of the products in a plurality of stores comprising:
a input unit of the products identification information of dealing; a dealing management unit which performs processing about dealing of said products corresponding to said inputted products identification information; a generating unit for dealing information which creates said dealing information which shows the processing about said dealing; a copy unit which copies said dealing information; a transmitting unit which transmits said plurality of reproduced dealing information; and a receiving device which receives the response to either of said plurality of dealing information which transmitted. Said transmitting unit retransmits said dealing information in the requirement of not receiving said response.

It may be provided with a addressing unit which gives a destination address which is different to said plurality of dealing information which said copy unit reproduced. Said transmitting unit may transmit said plurality of dealing information given said destination address, and may also retransmit said dealing information for a response to any of plurality of said dealing information transmitted, by making for said receiving device not to receive into a requirement.

Said POS server may be provided with a main control apparatus of said local terminal which receives said dealing information of said local terminal and transmit the response to said dealing information to said local terminal, and a sub control apparatus of said local terminal which transmits the response to said dealing information to said local terminal when said dealing information is received and said local terminal main control apparatus does not transmit said response. Said addressing unit may give the address of said local terminal main control apparatus and said local terminal sub-control apparatus to said two dealing information, and said transmitting unit may retransmit said dealing information with a requirement not to receive said response from said local terminal main control apparatus.

Said transmitting unit may retransmit said dealing information by making into a requirement for predetermined time amount to pass after said transmitting unit transmits said dealing information, and for said receiving device not to receive said response from said local terminal sub-control apparatus in the condition of not receiving said response from said local terminal main control apparatus.

When, in the condition of not receiving said response from said local terminal, said transmitting unit transmits said dealing information and predetermined time amount passes, and said receiving device receives said response from said local terminal sub-control apparatus, said transmitting unit may retransmit said dealing information in the requirement that when said transmitting unit transmits said dealing information next time, said local terminal sub-control apparatus does not receive said response.

In the condition of not receiving said response from said local terminal, after said transmitting unit transmits said dealing information, predetermined time amount passes. When said receiving device receives said response from said local terminal sub-control apparatus and said transmitting unit transmits said dealing information next time, in the condition of said local terminal sub-control apparatus not receiving said response, said transmitting unit may retransmit said dealing information by making for predetermined time amount to have passed, after said transmitting unit transmitted said dealing information, and for said receiving device to have not received said response from said local terminal main control apparatus into a requirement.

In the condition of not receiving said response from said local terminal, when said transmitting unit transmits said dealing information, predetermined time amount passes, said receiving device receives said response from said local terminal sub-control apparatus, and said transmitting unit transmits said dealing information next time, said transmitting unit may retransmit said dealing information under the condition that, said local terminal sub-control apparatus does not receive said response, predetermined time amount passes after said transmitting unit transmits said dealing information, said receiving device does not receive said response from said local terminal main, and the condition that, when said transmitting unit transmits said dealing information, said local terminal is restarted, said receiving device does not receive said response from said local terminal main control apparatus.

Said local terminal sub-control apparatus may store said dealing information on a local terminal which said POS server controls. When said transmitting unit transmits a demand of said dealing information received and stored from local terminals other than the local terminal concerned among said local terminals which said POS server controls, said transmitting unit may retransmit said demand by making to have not received said response from said local terminal sub-control apparatus into a requirement.

In the third embodiment of the present invention, at the POS system equipped with the POS server which controls the products dealing in a plurality of stores, and said local terminals arranged in said stores. The first local terminal of a plurality of said local terminals has an input unit which inputs the products identification information of the products to be dealt, a dealing management unit which performs processing about dealing of said products corresponding to said inputted products identification information, a generating unit for dealing information which creates the dealing information which shows the processing about said dealing, a copy unit which reproduces said dealing information, and a transmitting unit which transmits said plurality of reproduced dealing information. Said POS server has the first control and second control apparatus which receive and store the same dealing information showing dealing of products conducted in the first local terminal among said plurality of local terminals, from said first local terminal, and notify that said dealing information was received to said first local terminal, respectively. Said first local terminal further has a receiving device which receives said notice which shows the response to either of said plurality of dealing information transmitted. Said transmitting unit of said first local terminal retransmits said dealing information with a necessity condition of not receiving said response.

In the fourth embodiment of the present invention, the dealing control method which manages dealing of the products in a plurality of local terminals arranged in a plurality of stores on the POS server, comprising: the storing step of receiving and storing a plurality of same dealing information showing that products dealing was conducted in first local terminal of said plurality of local terminals, from said first local terminal; and the step notifying that said dealing information was received to said first local terminal after said storing step.

In the fifth embodiment of the present invention, a dealing control method to control said products dealing using the POS server which controls products dealing in a plurality of stores, comprising: a step of inputting products identification information for dealing; a step of performing processing about dealing of said products corresponding to said inputted products identification information; a step which creates the dealing information which shows the processing about said dealing;
a step which reproduces said dealing information; a step of transmitting said plurality of reproduced dealing information;
a step of receiving the response to either of said plurality of dealing information transmitted; and a step that retransmits said dealing information by making not to receive said response into a requirement.

In the sixth embodiment of the present invention, a recording medium which stored the program for computers which controls dealing of the products in a plurality of local terminals arranged in a plurality of stores on the POS server, comprising:
a storing module which receives and stores a plurality of same dealing information showing that products dealing was conducted in the first local terminal of said plurality of local terminals, from said first local terminal; and a notice module notifying that said dealing information was received, to said first local terminal.

In the seventh embodiment of the present invention, the recording medium which stores the program for local terminals connected to the POS server which controls products in a plurality of stores, comprising: an input module which inputs the products identification information of products to be dealt;
a dealing processing module which performs processing about dealing of said products corresponding to said inputted products identification information; a dealing information generating module which creates the dealing information which shows the processing about said dealing; a copy module which reproduces said dealing information; a transmitting module which transmits said plurality of reproduced dealing information; a receiving module which receives the response to either of said plurality of dealing information transmitted; and a re-transmitting module which retransmits said dealing information by making not to receive said response into a requirement.

In addition, outline of the above-mentioned invention does not enumerate all the required features of this invention, and sub-combinations of these characterizing group can also be inventions.

### BRIEF DESCRIPTION OF THE DRAWINGS

Fig. 1 shows a whole POS system.
Fig. 2 shows a block diagram showing the hardware configuration of a local terminal.
Fig. 3 shows a functional block diagram showing the function of processing.
Fig. 4 shows a block diagram showing the hardware configuration of a POS server.
Fig. 5 shows a block diagram showing the hardware configuration of the first control apparatus.
Fig. 6 shows a functional block diagram showing the function of database operating instruction management unit.
Fig. 7 shows a configuration of dealing database of the first control apparatus.
Fig. 8 shows a data format of stock master of the first control apparatus.
Fig. 9 shows a data format of receiving/shipping file of the first control apparatus.
Fig. 10 shows a flow chart showing operation of the first local terminal when selling products to a customer.
Fig. 11 shows a flow chart showing the detailed operation of the first local terminal in dealing processing step (S500) of Fig. 10.
Fig. 12 shows a flow chart showing the detailed operation of the first local terminal in database operating instruction transmitting step (S508) of Fig 10.
Fig. 13 shows a flow chart showing the operation of the first control apparatus when the first control apparatus, second control apparatus, and total control apparatus of the POS system received same database operating instruction addressed to each apparatus, from the first local terminal.
Fig. 14 shows a flow chart showing the detailed operation of the first control apparatus of a POS server in database updating check step (S204) shown in Fig. 13.
Fig. 15 shows a flow chart showing the detailed operation of the first control apparatus in matching check step (S212) of database operating instruction of Fig. 13.
Fig. 16A shows a flow chart showing the operation of the first control apparatus when received the request of correcting value at stocktaking.
Fig. 16B shows a flow chart showing the operation of the first control apparatus when received the request of correcting value at stocktaking.
Fig. 17 shows a block diagram showing the configuration of the POS server in the second preferred embodiment.
Fig. 18 shows a flow chart showing the detailed operation when the POS server in the second embodiment received a bar code from the first local terminal.
Fig. 19 shows a flow chart showing the detailed operation of the total control apparatus when the POS server in the second embodiment received database operating instruction from the first local terminal.
Fig. 20 shows a block diagram showing the configuration of the POS server in the third third preferred embodiment.

### PREFERRED EMBODIMENT OF THE INVENTION

The scope of the present invention is not limited to the following preferred embodiments. All combinations of the feature described in the embodiments are not indispensable for the solution means of the invention.

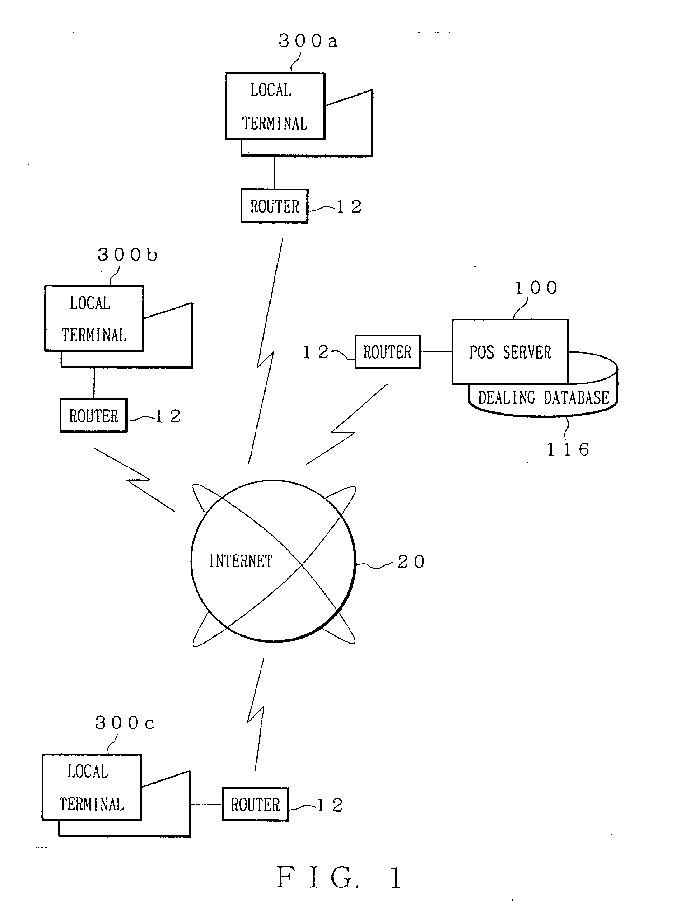

Fig. 1 shows a whole POS system. The POS system is equipped with the first local terminal 300a, second local terminal 300b, (it is called local terminal 300 for short), and the POS server 100 that controls a plurality of local terminals 300. The plurality of local terminals 300 are capable of communication link with the POS server 100 through the Internet 20. Local terminal 300 is a client computer. Local terminal 300 has peripheral devices, such as a journal printer and a bar code reader, by using a commercial personal computer. By these cooperation, the local terminal 300 performs dealing processing about dealing of sale, purchase, etc. in a store. The local terminal 300 connects with the POS server 100 through a router 12, and acquires required information.

The POS server 100 is a server computer and has dealing database 116 which stores products information of the contents of products with selling price, and information of the contents of dealing in the local terminal 300 received therefrom. The POS server 100 is connected to the local terminal 300 through the router 12. The POS server 100 receives the database operating instruction to reflect in dealing database 116 that products were dealt with in the local terminal 300 , from the local terminal 300.

In addition, as a network line, although the Internet line network was illustrated here, when safety is thought as important, a frame relay network may be used and a way of connection is not restricted.

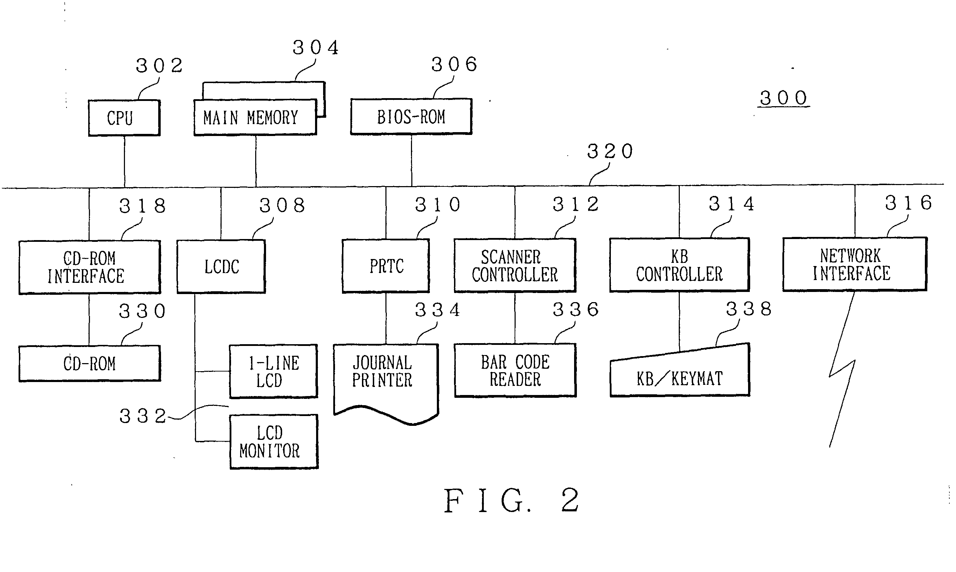

Fig. 2 is a block diagram showing hardware configuration of the local terminal 300 shown in Fig 1. The local terminal 300 has a CPU 302, a main memory 304, a BIOS-ROM 306, a display controller (LCDC) 308, a printer controller (PRTC) 310, a scanner controller 312, a keyboard controller 314, a network interface 316, a CD-ROM interface 318, a CD-ROM 330, an LCD monitor 332, a journal printer 334, a bar code reader 336 and a keyboard/keymat.

The CPU 302 performs arithmetic logic operation according to the program stored in the main memory 304 and BIOS-ROM 306. The CPU 302 also controls various peripheral devices such as the journal printer 310 and bar code reader 312. THe main memory 304 consists of RAM. The BIOS-ROM 306 stores BIOS (intercalation output-control system) program which controls the peripheral device connected. The LCDC 308 is connected to the LCD display 308 containing a line display. The printer controller 310 is connected to the journal printer 334 which publishes a receipt. The scanner controller 312 is connected to the bar code reader 336. The keyboard controller 314 is connected to the keyboard/keymat 338. The CD-ROM interface 318 controls the CD-ROM 330.

The network interface 316 consists of ,for example, modem cards, and is connected with the POS server 100 via communication line network containing the Internet 20. Through the network interface 316, the local terminal 300 transmits dealing information showing products are sold in the local terminal 300, to the POS server 100, and receives the response to the transmitted information. The input-output bus 320 constitutes lines for data address and controls, whereby data communication is mutually performed through the input-output bus 320 and each function is realized.

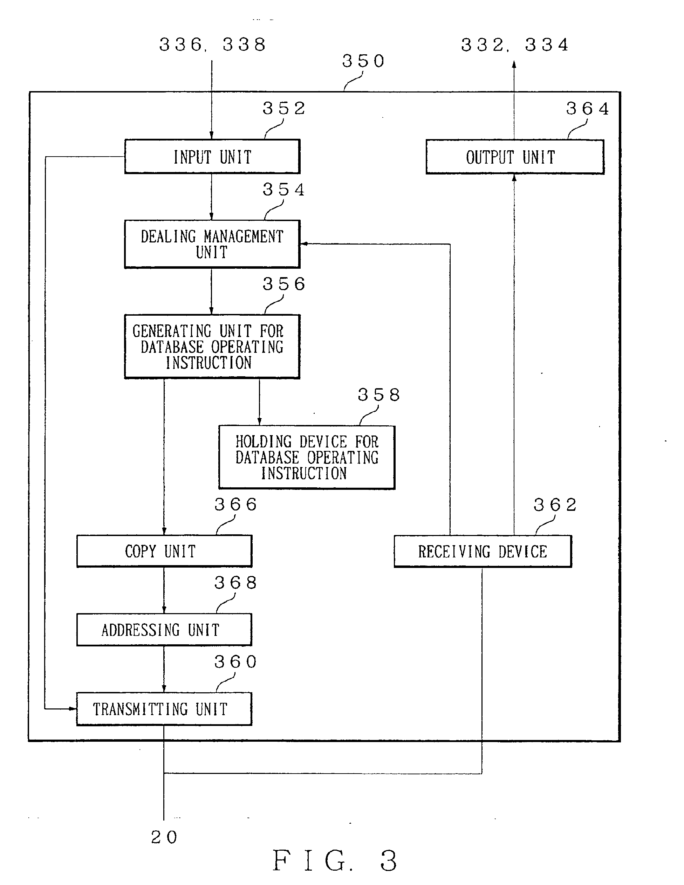

Fig. 3 is a functional block diagram showing the function of the processing unit 350 realized by the hardware configuration of Fig 2. The processing unit 350 is the one summarizing the function about dealing processing. A series of operation of the processing unit 350 is realized by cooperation of the program mainly stored in the CPU 302, the main memory 304 and the BIOS-ROM 306. However, the processing unit 350 may be realized by the other component and the flexibility of the layout is high. The processing unit 350 has a input unit 352, a dealing management unit 354, a generating unit for database operating instruction 356, a holding device for database operating instruction 358, a transmitting unit 360, a receiving device 362, a output unit 364, a copy unit 366, and a addressing unit 368.

The input unit 352 inputs the identification information of products, the number of products, and the price of products through the bar code reader 336, or the keyboard/keymat 338. The identification information of products may be bar code stuck on products.

The dealing management unit 354 performs arithmetic operation based on the information inputted from the input unit 352. For example, the total price dealt with one customer is computed. When selling products to a customer, the purchased total price is computed.

The generating unit for database operating instruction 356 creates a database operating instruction, whereby the contents which a dealing management unit 354 processed are made to reflect in a dealing database 116 of the POS server 100. As database operating instruction, it may be to reflect ,for example, five pencils or three rubbers sold, in the database of the POS server 100. When five pencils and three rubbers are sold to one customer, each database operating instruction about pencil and rubber is created, respectively. Thus, the database operating instruction is created for every products. The database operating instruction may be SQL (Structured Query Language).

The copy unit 366 copies a database operating instruction received from the generating unit for database operating instruction 356. The addressing unit 368 gives an IP address of the destination transmitting each database operating instruction, to each database operating instruction received from the copy unit 366. The address may be IP address.

The transmitting unit 360 receives a database operating instruction to which the address was given from the addressing unit 368, and transmits to each destination through the Internet 20. The transmitting unit 360 transmits the products information requirements including the selling price of products, to the POS server 100. The holding device for database operating instruction 358 holds the database operating instruction created by the generating unit for database operating instruction 356.

The receiving device 362 receives the products information which including the selling price of products, from the POS server 100 through the Internet 20. The receiving device 362 also receives the notice of completion to the transmitted database operating instruction. The first local terminal 300a has set up beforehand, among a plurality of transmission destinations to which the transmitting unit 360 transmits a database operating instruction, a main response apparatus from which the notice of completion to a database operating instruction should be received, and a sub-response apparatus from which the notice of completion to a database operating instruction should be received when the notice of completion cannot be received from the main response apparatus. The receiving device 362 further waits receiving the notice of completion from the sub-response apparatus for a predetermined time, when not receiving the notice of completion from the main response apparatus for a predetermined time. Even if predetermined time amount passes, when not receiving the notice of completion, it makes the transmitting unit 360 retransmit.

The output unit 364 outputs the information for the journal printer 334 printing, and the information for the display 332 displaying, to the journal printer 334 and the LCD display 332, respectively. The output unit 364 outputs the contents of dealing corresponding to a database operating instruction which the holding device for database operating instruction 358 holds.

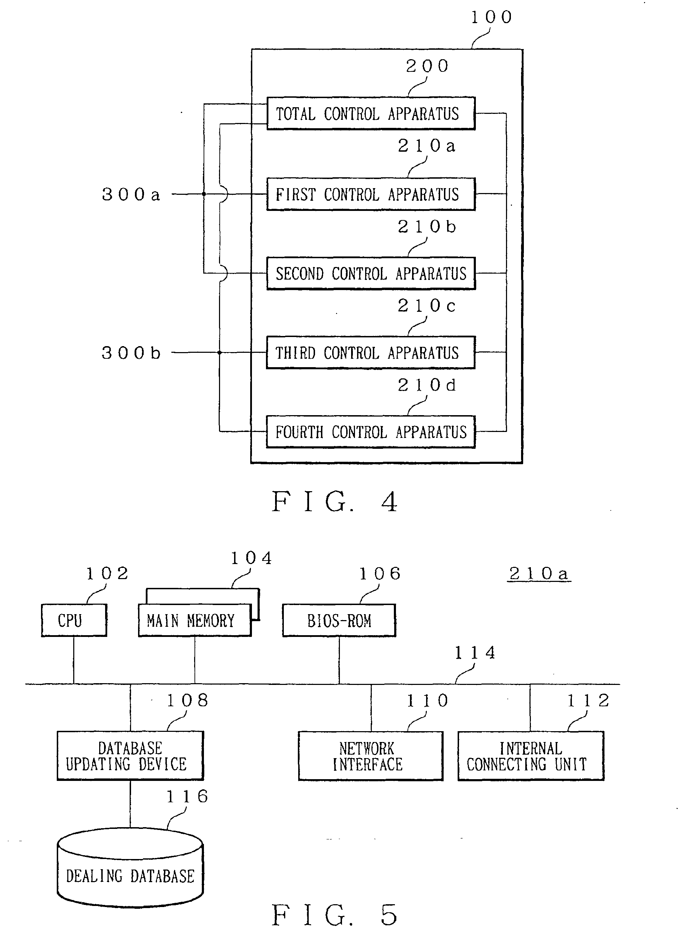

Fig. 4 is the block diagram showing the hardware configuration of the POS server 100 shown in Fig. 1. The POS server 100 has a total control apparatus 200, a first control apparatus 210a, a second control apparatus 210b, a third control apparatus 210c, and a fourth control apparatus 210d. The total control apparatus 200, first control apparatus 210a, second control apparatus 210b, third control apparatus 210c, and fourth control apparatus 210d (called as control apparatus 210) are possible for a communication link with POS server other than a plurality of local terminals 300 and the POS server 100 through the Internet 20.

The apparatus contained in the POS server 100 is set as the apparatus with which the first local terminal 300a and second local terminal 300b transmit a database operating instruction, and stores the database operating instruction of predetermined the local terminal 300. Referring to Fig. 4, it is described about each apparatus of the POS server 100 which stores the database operating instruction of the first local terminal 300a and second local terminal 300b.

Each of the first control apparatus 210a and second control apparatus 210b receives and stores, from the first local terminal 300a, the database operating instruction which reflects dealing of products conducted in the first local terminal 300a to dealing database 116. That is, each address of the first control apparatus 210a and second control apparatus 210b is given, respectively, and the first control apparatus 210a and second control apparatus 210b receive the same database operating instruction transmitted from the first local terminal 300a.

The first control apparatus 210a transmits to the first local terminal 300a by giving the completion notice which makes the first local terminal 300a recognize completion of processing as the main response information, after processing the database operating instruction received from the first local terminal 300a.

The second control apparatus 210b transmits to the first local terminal 300a by giving the completion notice which makes the first local terminal 300a recognize having completed processing of a database operating instruction as a sub-response information, when the main response information is not received by the first local terminal 300a from the first control apparatus 210a after processing the database operating instruction received from the first local terminal 300a. The first local terminal 300a sets the first control apparatus 210a as main response apparatus and the first control apparatus 210a as sub-response apparatus, respectively. Thus, since the first local terminal 300a sets up beforehand the main response apparatus to store the database operating instruction of the first local terminal 300a in the first, and the sub-response apparatus to store a database operating instruction in the second, a plurality of control apparatuses 210 should just transmit the notice of completion similarly, when a database operating instruction is received.

When the database operating instruction of the first local terminal 300a is not correctly stored in the first control apparatus 210a, the second control apparatus 210b provides the first control apparatus 210a with the database operating instruction. That is, the second control apparatus 210b functions as a backup device of the first control apparatus 210a. Thus, since a plurality of control apparatuses 210 receive the same database operating instruction transmitted from the first local terminal 300a, when the database operating instruction is not correctly stored in one control apparatus 210, the database operating instruction stored in another apparatus can recover.

The third control apparatus 210c and fourth control apparatus 210d receive and store respectively, a database operating instruction from the second local terminal 300b. That is, each address of the third control apparatus 210c and fourth control apparatus 210d is given, respectively, and the third control apparatus 210c and fourth control apparatus 210d receive the same database operating instruction transmitted from the second local terminal 300b.

The third control apparatus 210c transmits the main response information, which makes the second local terminal 300b recognize completion of processing, to the second local terminal 300b, after processing the database operating instruction received from the second local terminal 300b. The fourth control apparatus 210d transmits a sub-response information which makes the second local terminal 300b recognize having completed processing of a database operating instruction to the second local terminal 300b, when the main response information is not received by the second local terminal 300b from the second control apparatus 210b, after processing the dealing information received from the second local terminal 300b.

That is, the third control apparatus 210c and third control apparatus 210c is set as main response apparatus and sub-response apparatus for the second local terminal 300b and the second local terminal 300b, respectively. Moreover, the fourth control apparatus 210d functions as a backup device of the third control apparatus 210c.

Thus, the POS server 100 can distribute processing by controlling different local terminals with a plurality of control apparatuses 210, when controlling a plurality of local terminals 300. In this way, the POS server 100 can response request from local terminal 300 on real time, even when there are many local terminals 300 to be controlled.

The total control apparatus 200 receives and stores, from the first local terminal 300a and second local terminal 300b, the database operating instruction given the address of total control apparatus. Thus, the total control apparatus 200 stores the database operating instruction received from all the local terminals 300 controlled by the POS server 100. Therefore, even when a plurality of control apparatuses 210 control different local terminals 300, the total control apparatus 200 can totally control all the local terminals 300.

Although Fig. 4 shows the POS server 100 as a one unit having a plurality of control apparatuses 210, it is not necessary to be one unit physically, and a plurality of control apparatuses 210 and the total control apparatus 200 may be arranged in a different location, respectively. In this case, each control apparatus 210 and the total control apparatus 200 may communicate with local terminal 300 through the Internet 20 and may communicate with other apparatus in the POS server 100 using communication lines, such as LAN. For example, the first control apparatus 210a may be arranged in Tokyo, and the second control apparatus 210b may be arranged in Kyushu. Thus, since a plurality of control apparatuses 210 can be arranged in a different location, in case of when the first control apparatus 210a does not operate, or when the traffic of the first control apparatus 210a is crowded, the local terminal 300 can access the second control apparatus 210b, and can perform the same processing.

Fig. 5 is a block diagram showing the hardware configuration of the first control apparatus 210a shown in Fig 4. The first control apparatus 210a has a CPU 102, a main memory 104, BIOS-ROM 106, a database updating device 108, a dealing database 116, a network interface 110, a internal connecting unit 112, and input/output bus 114.

The CPU 102 performs arithmetic logic operation according to the program stored in the main memory 104 and BIOS-ROM 106. CPU 102 also controls various peripheral devices. Main memory 104 consists of RAM. BIOS-ROM 106 stores BIOS (intercalation output-control system) program which controls peripheral devices connected to a system. Database updating device 108 performs format control and read/write control of the dealing database 116. The dealing database 116 stores the contents of the dealing in the local terminal 300.

The network interface 110 connects with the local terminal 300 through the Internet 20, and receives a database operating instruction etc. The network interface 110 also transmits the response to the received information. The internal connecting unit 112 connects with the second control apparatus 210b, total control apparatus 200, and backup unit 220 through communication lines, such as LAN. Therefore, the first control apparatus 210a, second control apparatus 210b, total control apparatus 200, and backup unit 220 in the POS server 100, can transmit and receive information without intervening the Internet 20. In addition, the control apparatus 210a is provided with peripheral devices(not shown), such as a LCD monitor and a keyboard, via input/output bus 114 through exclusive input/output controller, like the local terminal 300 shown in Fig. 2.

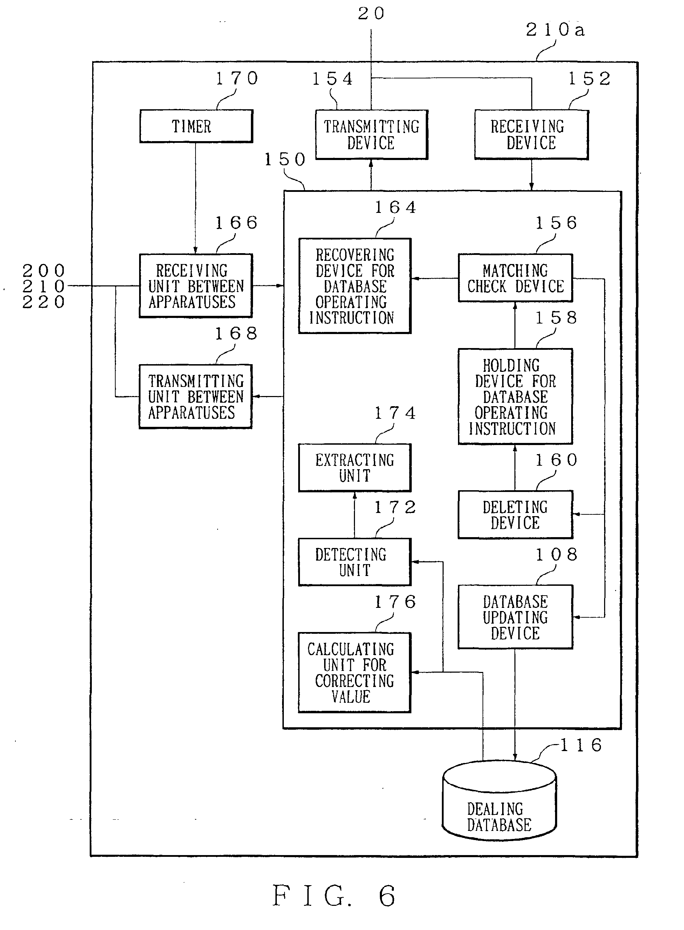

Fig. 6 is a functional block diagram showing the function of the database operating instruction management unit 150 characteristic of the present embodiment among the functions of the first control apparatus 210a realized by the hardware configuration of Fig. 5. The database operating instruction management unit 150 is the unit combined the function to process a database operating instruction. A series of operation of the database operating instruction management unit 150 is realized by cooperation of the program mainly stored in the CPU 102, main memory 104, and BIOS-ROM 106. However, the database operating instruction management unit 150 may be realized by the other component, and the flexibility of the layout is high.

The database operating instruction management unit 150 has a matching check device 156, a holding device for database operating instruction 158, a deleting device 160, a database updating device 108, a recovering device for database operating instruction 164, a detecting unit 172, a extracting unit 174, and a calculating unit for correcting value 176.

The receiving device 152 receives database operating instruction through the Internet 20. The receiving device between apparatuses 166 receives database operating instruction from other control apparatuses 210, and sends to the matching check device 156 or holding device for database operating instruction 158. The receiving device between apparatuses 166 receives the database operating instruction demand, which requests transmission of database operating instruction, from other control apparatuses 210. Timer 170 measures time amount.

The holding device for database operating instruction 158 holds temporarily the database operating instruction received from the receiving device 152 and the receiving device between apparatuses 166. The holding device for database operating instruction 158 receives a database operating instruction demand from the receiving device between apparatuses 166, and sends the database operating instruction in the a database operating instruction demand, to the transmitting unit between apparatuses 168.

The matching check device 156 receives the same database operating instruction as the first local terminal 300a transmitted from the receiving unit between apparatuses 166 and the holding device for database operating instruction 158 respectively.

The matching check device 156 transmits a notice of the completion of matching check, which shows that the check of matching was completed, to the transmitting device 154 and the deleting device 160, when the matching of a database operating instruction is able to be checked. The matching check device 156 sends the database operating instruction whose check of matching was completed, to the database updating device 108. The matching check device 156 sends the recovering instruction which shows to obtain the lacked database operating instruction, to the recovering device for database operating instruction 164, when the check of matching of database operating instruction was not completed, that is, the holding device for database operating instruction 158 does not hold the database operating instruction which should be held.

The deleting device 160 will delete the database operating instruction held at the holding device for database operating instruction 158, if the notice of completion is received. If the database operating instruction is received, the database updating device 108 will execute the received database operating instruction, and will update the dealing database 116. The recovering device for database operating instruction 164 will transmit a recovering instruction through the transmitting unit between apparatuses 168, if the recovering instruction is received from the matching check device 156. The transmitting unit between apparatuses 168 transmits the recovering instruction and the database operating instruction to other control apparatuses 210. The transmitting device 154 will transmit the notice of completion which shows having completed reception of a database operating instruction to the local terminal 300, if the notice of the completion of an matching check is received.

The detecting unit 172 detects predetermined information from the information stored in the dealing database 116. The extracting unit 174 extracts predetermined information from the total control apparatus 200 through the receiving unit between apparatuses 166, when the information which the detecting unit 172 should detect is not stored in the dealing database 116. The calculating unit for correcting value 176 computes the corrected value of the number of stock of products at the time of stocktaking based on the information stored in the dealing database 116.

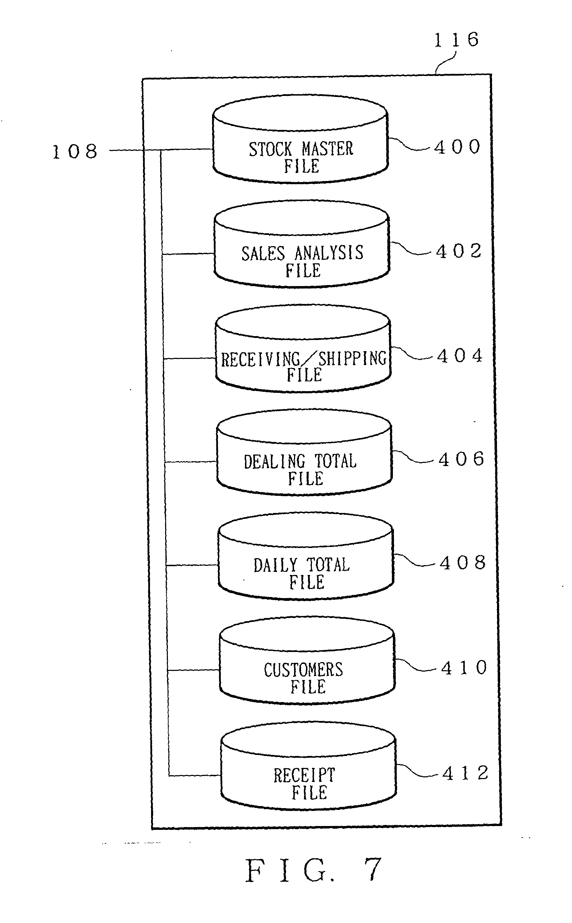

Fig. 7 shows the configuration of the database stored in the dealing database 116 of the first control apparatus 210a. The dealing database 116 includes a stock master file 400, a sales analysis file 402, a receiving/shipping file 404, a dealing total file 406, a daily total file 408, a customers file 410, and a receipt file 412.

The stock master file 400 is matched with the products identification information of the products sold at store which the POS server 100 controls, and stores the products information in which the contents contain the price of products, and the number of stock of the products. Among the dealing information received from the local terminal 300 controlled by the first control apparatus 210a, the receiving/shipping file 404 matches the contents of dealing for every products with the time dealing conducted, and is stored. The sales analysis file 402 stores the sales for every genre of products. The dealing total file 406 stores the monthly total information on the dealing amount of money. The daily total file 408 stores the daily sales of each store. The customers file 410 is matched with a plurality of customers, and stores the dealing information of the customer applicable to each customer. The receipt file 412 stores the dealing information for every receipt.

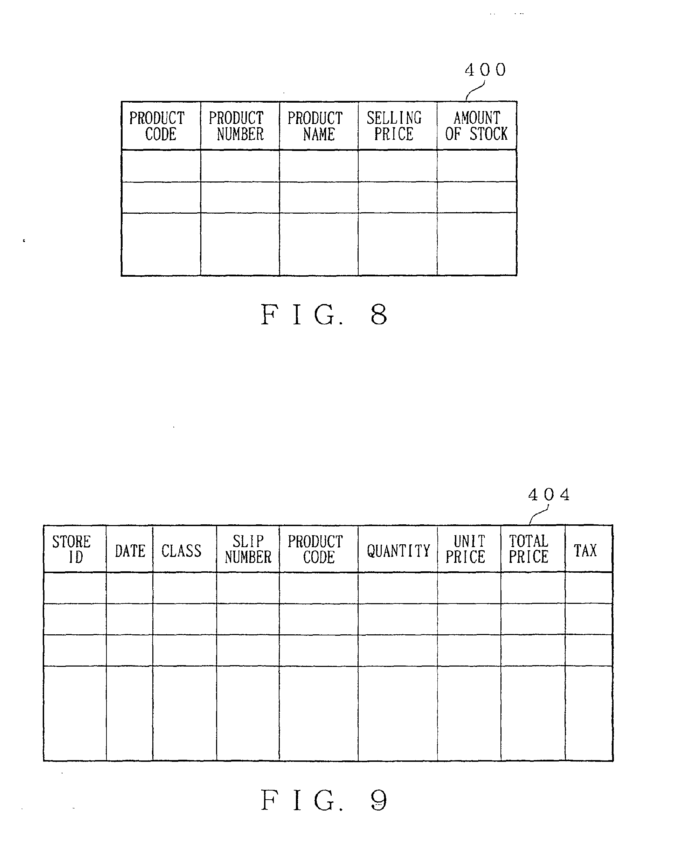

Fig. 8 shows a data format of the stock master file 400 of the first control apparatus 210a. The stock master file 400 is matched with the bar code which identifies products, and stores products information. The stock master file 400 has a product code field, a product number field, a product name field, a selling price field, and an amount of stock field. The code number which identifies products is stored in the product code field. A number peculiar to products is stored in the product number field. The name of products is stored in the product name field. A selling price is stored in the selling price field. The current number of stock of products is stored in the amount of stock field. The amount of stock stored in the stock field is updated whenever products are dealt with in the local terminal 300 . The amount of stock is updated again, when products are received. At the time of the stocktaking in the store provided with the local terminal 300 , the right amount of stock counted in stocktaking is stored.

Thus, since the stock master file 400 is matched with the products identification information of each products, and stores products information and the amount of stock of products, it can extract the products information and the amount of stock of each products to coincidence.

In the POS system of the present embodiments, the local terminal 300 does not have the stock master 400. Therefore, the local terminal 300 can be realized by simple computers. Moreover, the local terminal 300 can be extended comparatively easily. Moreover, since the stock master 400 is installed in the POS server 100, it can be updated easily.

Moreover, the products information registered into the stock master 400 of the first control apparatus 210a may be updated for every predetermined period. For example, when the amount of stock being zero and no dealing made for one month, the products information that there were no dealing may be deleted from the stock master 400. Thus, the first control apparatus 210a can store only indispensable products information. By this, the first control apparatus 210a can process information efficiently.

Fig. 9 shows a data format of the receiving/shipping file 404 of the first control apparatus 210a. The receiving/shipping file 404 stores a store ID field, a date field, a class field, a slip number field, a product code field, a quantity field, a unit price field, a total price field, and a tax field.

The identification information of store is stored in the store ID field. Thus, since the store ID is stored identifiable for every receiving/shipping data, the dealing information in each store is identified. The date on which dealing were conducted is stored in the date field. An operating class is stored in the class field.
For example, the information which shows whether dealings are sale or acquisition is stored. Thus, since the operating class is stored, for example, when the information about sale is required, the operating class can extract and offer the data specified as sale.

The serial number given for every dealing is stored in the slip number field. The code of products with dealing is stored in the product code field. The quantity of products with dealing is stored in the quantity field. The unit price of products with dealing is stored in the unit price field. The total price of products is stored in the total price field. The tax is stored in the tax field.

When the operating class is stocktaking, the actually counted number of right stock is stored in the quantity field by stocktaking.

Thus, the receiving/shipping file 404 of the control apparatus 210 stores the information about the dealing in the local terminal 300 which control apparatuses control. Therefore, required information can be offered when the information on dealing is required from the local terminal 300. The total control apparatus 200 transmits the database operating instruction showing by demand information to the local terminal 300, when the demand information which requires the database operating instruction of local terminals 300 other than the local terminal 300 is received from the local terminal 300.

Since the configuration and operation of the second control apparatus 210b, third control apparatus 210c and fourth control apparatus 210d, are the same as those of the first control apparatus 210a explained in Figs. 5 to 9, explanation is omitted.

Thus, the POS server 100 has a plurality of control apparatuses 210 having identical configuration and function. Moreover, each control apparatus 210 can be realized by simple computer. Therefore, the POS system can be built easily according to the scale of each store.

Moreover, since each control apparatus 210 can communicate with the local terminal 300 through each Internet interface 114, when the count of a communication link increases, and even when the amount of information which the POS server 100 controls increases, it can respond by increasing the number of control apparatus 210.

Next, the hardware configuration of the total control apparatus 200 is explained. The hardware configuration of the total control apparatus 200 is almost the same as the configuration of the control apparatus 210 explained in Figs. 5 to 9. However, it differs from the first control apparatus 210a in respect of the following.

The receiving/shipping file 404 of total the control apparatus 200 stores the information stored in the receiving/shipping file 404 of each of all apparatuses in the POS server 100. Moreover, the stock master file 400 of the total control apparatus 200 stores the products information on all the products that the POS server 100 controls. The total control apparatus 200 differs from the control apparatus 210 at these points. Moreover, the stock master file 400 of the total control apparatus 200 may store the products information on the products which do not have stock, i.e., the products which are not carried at the store which the POS server 100 controls. In this case, zero are stored in the amount of stock field.

Moreover, although the total control apparatus 200 receives and controls a database operating instruction from the control apparatus 210, it does not transmit the notice of completion to the local terminal 300. Therefore, it is not necessary to transmit a response to real time like the control apparatus 210. Thus, the quick processing is not required of the total control apparatus 200.

The POS server 100 has the total control apparatus 200 which stores comparatively a lot of data, and the control apparatus 210 which stores comparatively little data. Therefore, the total control apparatus 200 is required for storing large quantities of data, but not required for real time communication. On the other hand, as for the control apparatus 210, it is desirable to have CPU 102 of processing speed which can make real-time communication with the local terminal 300. However, the amount of data which the control apparatus 210 can store may be a relatively small quantity. Thus, the POS server 100 has the control apparatus 210 which mainly takes charge of communication link with the local terminal 300, and the total control apparatus 200 which mainly takes charge of control of data, respectively. Thus, by distributing processing, real-time response and control of large quantities of data can be performed.

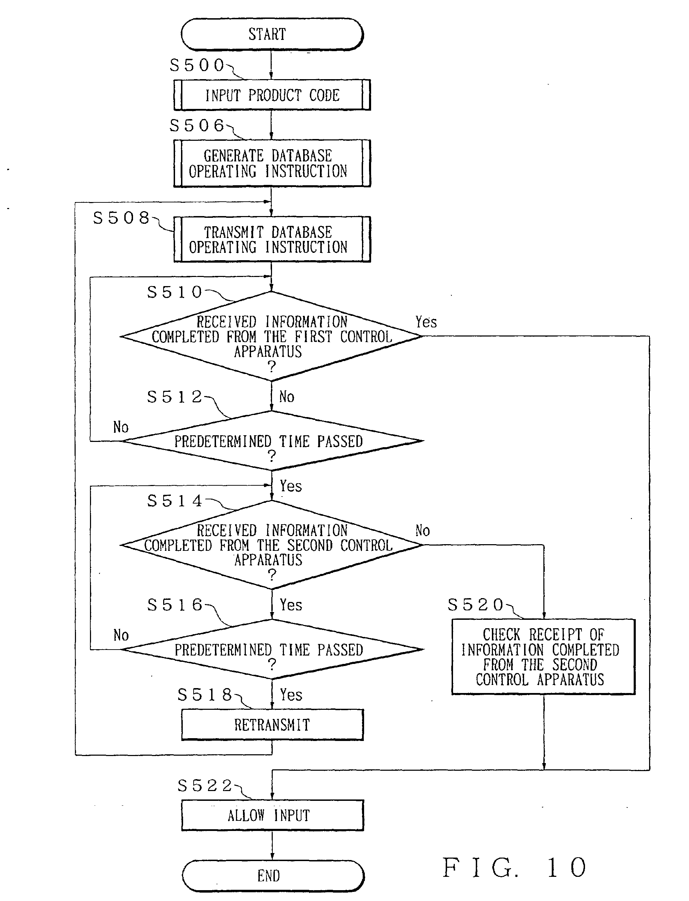

Fig. 10 is a flow chart which shows operation of the first local terminal 300a when selling products to a customer. The first local terminal 300a is operated by a register operator, usually, the employee of a store, and dealing processing is performed (S500).
Next, the generating unit for database operating instruction 356 creates the database operating instruction to which the contents of dealing processing are made to reflect in the dealing database 116 of the POS server 100 (S502). At this time, the generating unit for database operating instruction 356 creates further the run command which shows that the database operating instruction is executed. Next, the transmitting unit 360 transmits the same database operating instruction addressed with the first control apparatus 210a, second control apparatus 210b and total control apparatus 200, to the POS server 100 (S508). At this time, the transmitting unit 360 transmits a run command further.

Next, if the notice of completion is received from the first control apparatus 210a (main response apparatus) (S510), next process will be permitted for the first local terminal 300a (S522).
If a predetermined time has passed (S512) in the condition of not receiving the notice of completion from the first control apparatus 210a at S510, the notice of completion from the second control apparatus 210b (sub-response apparatus) is waited for a predetermined time (S514, S516). If the notice of completion is received from the second control apparatus 210b in predetermined time at S514, the first local terminal 300a will set the second control apparatus 210b as the main response apparatus to answer the main response to the first local terminal 300a, and will set the first control apparatus 210a as the sub-response apparatus to answer the sub-response to the first local terminal 300a, (S520). Then the next process to the first local terminal 300a is attained (S522).

When the notice of completion is not received from the second control apparatus 210b in predetermined time at S514, the first local terminal 300a again transmits a database operating instruction and returns to S508. Process of the first local terminal 300a is ended when selling products.

Thus, the first local terminal 300a can check the completion of transmission by receiving the notice of completion from the sub-response apparatus, when not receiving the notice of completion from the main response apparatus in predetermined time.

Moreover, in S520, where the sub-response apparatus was changed into the main response apparatus and the sub-response apparatus was changed into the main response apparatus, when the power supply of the first local terminal 300a is turned off and is turned on again, the first control apparatus 210a and second control apparatus 210b is set as the main response and sub-response apparatus.

Thus, since the main response apparatus can be set as other control apparatus 210 when the notice of completion cannot be received from the main response apparatus, even when it cannot communicate to the main response apparatus normally, a database operating instruction can be stored in the POS server 100 by performing a communication link with other control apparatus 210.

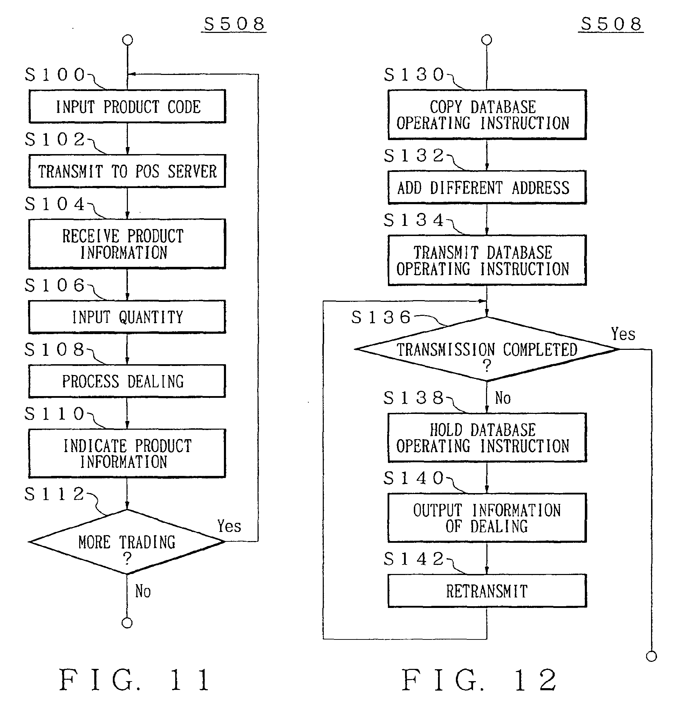

Fig. 11 is a flow chart which shows the detailed operation of the first local terminal 300a in the dealing processing step (S500) of Fig. 10 . The bar code reader 336, or keyboard/keymat 338 is operated by the operator of a register, usually the employee of the store, and the input unit 352 inputs a bar code (S100). Next, the transmitting unit 360 transmits the inputted bar code to the POS server 100 through a network interface 316 (S102). Next, the products information on the products, the bar code of which is transmitted to the POS server 100, is received from the POS server 100 (S104). At this time, the number of stock of products is received further. Therefore, the register operator can always know the state of stock.

In S102, it may be transmitted to the first control apparatus 210a, second control apparatus 210b, and total control apparatus 200, and to 120a and second control apparatus 210b.

Next, the register operator inputs the quantity of the products corresponding to the bar code inputted in S100 (S106). Next, the dealing management unit 354 performs dealing processing based on the quantity and the selling price of products (S108). Next, the output unit 364 displays the received products information on the LCD display 308 (S110).

Thus, since the local terminal 300 receives products information from the POS server 100, the local terminal 300 does not need to store products information beforehand. Therefore, the computer which constitutes the local terminal 300 may have comparatively small data volume. Moreover, since products information is stored in the POS server 100, it is easy to update and it can be made on real time. Therefore, the local terminal 300 can always perform dealing processing using the newest products information.

When further purchasing other products, it is repeated from S100 to S110 (S112). If the processing of S100 to S110 is completed for all products (S112), it will go to the database operating instruction generating step (S502) of Fig. 10.

Since the database operating instruction and run command are transmitted from the local terminal 300 whenever dealing with one customer completed, the POS server 100 can receive the database operating instruction, whenever dealing are conducted. Thus, the POS server 100 can make the contents of dealing performed in the local terminal 300 reflect in the dealing database 116, whenever dealing are completed in the local terminal 300. That is, the POS server 100 can update the dealing database 116 on real time.
Therefore, the dealing database 116 can always store the contents of dealing of the completion time of dealing. The total of the completion time of dealing can be performed based on the data stored in the dealing database 116.

Fig. 12 is a flow chart which shows the detailed operation of the first local terminal 300a in database operating instruction transmitting step (S508) of Fig 10. The copy unit 366 copies the database operating instruction created in the database operating instruction generating step (S114), and creates three database operating instructions (S130). Thus, the copy unit 366 reproduces the database operating instruction which the generating unit for database operating instruction 356 created, whenever the local terminal 300 completes dealing with a customer.

Next, the addressing unit 368 gives the address of the first control apparatus 210a, second control apparatus 210b, and total control apparatus 200 to three same database operating instructions received from the copy unit 366 (S132). Next, the transmitting unit 360 transmits three database operating instructions with destinations given by the addressing unit 368, through the Internet 20 (S134). When transmission completes the database operating instruction (S136), it goes to the notice of completion receiving step (S510) of Fig. 10.

In S136, when the transmission of the database operating instruction is not completed, the holding device for database operating instruction 358 holds the database operating instruction (S138). Next, the output unit 364 outputs the information showing that the contents of dealing and the database operating instruction were not able to be transmitted, to the journal printer 334 (S140). Thus, since when the database operating instruction is not able to be transmitted, the journal printer 334 and the LCD display 332 output the information showing that the contents of dealing and the database operating instruction were not able to be transmitted, the register operator can recognize that the database operating instruction was not able to be transmitted.

Next, the Internet interface 316 transmits again the database operating instruction held at the holding device for database operating instruction 358 (S142). S136 to S142 is repeated. Thus, if the Internet interface 316 is not able to transmit the database operating instruction at first access, it accesses again and can transmit the database operating instruction, and it can certainly transmit to the POS server 100. After transmitting the database operating instruction by S142, the database operating instruction held at the holding device for database operating instruction 358 may be deleted.

Operation of the second local terminal 300b when selling products to a customer is the same as operation of the first local terminal 300a explained using Figs. 10 to 12. However, the second local terminal 300b transmits to the first control apparatus 210a, second control apparatus 210b, and total control apparatus 200, which differs from the first local terminal 300a where transmitted to the third control apparatus 210c, fourth control apparatus 210d, and total control apparatus 200.

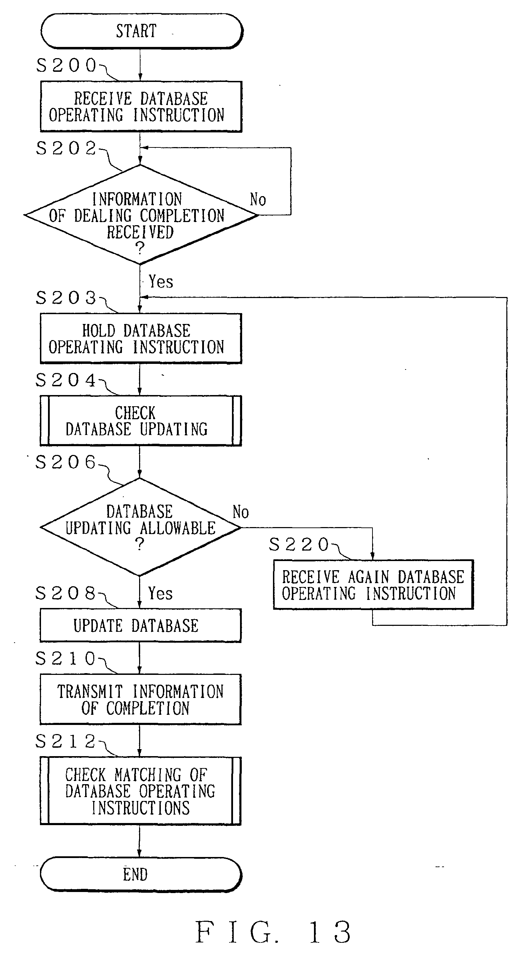

Fig. 13 is a flow chart of the operation of the first control apparatus 210a, when the first control apparatus 210a, second control apparatus 210b, and total control apparatus 200 of the POS system received each same database operating instruction from the first local terminal 300a.

First, the network interface 110 of the first control apparatus 210a receives the database operating instruction addressed to the first control apparatus 210a (S200). Next, after completion of the dealing in the local terminal 300 , the run command to execute a database operating instruction (S202) is received. When not receiving the notice of the completion of dealing, the holding device for database operating instruction 158 holds the database operating instruction until it receives the notice of the completion of dealing. In the meantime, a plurality of database operating instructions are received.

In S202, when the network interface 110 receives the notice of the completion of dealing, the database updating device 162 checks whether can update the file stored in the dealing database 116 based on the database operating instruction (S204). Next, when all files are able to be updated (S206), and all database are updated (S208). However, when the selling price of the products which the received database operating instruction shows differs from the selling price of the products stored in the dealing database 116, the selling price of the products shown in the received database operating instruction is matched in products ID and stored therein. When renewal of the dealing database 116 is not possible at S206, the database operating instruction is again received from the first local terminal 300a (S220), and it returns to the database updating processing step (S204).

Next, the notice of completion which shows that the renewal of the file was completed is transmitted to the first local terminal 300a (S210). Next, the matching check device 156 checks the matching of the database operating instruction stored in the holding device for database operating instruction 158, and the database operating instruction received from the second control apparatus 210b through the receiving unit between apparatuses 166 (S212). Operation of the first control apparatus 210a when receiving the database operating instruction is ended.

Since the first control apparatus 210a is set as the main response apparatus with which the first local terminal 300a should receive the main response, the first local terminal 300a receives the notice of completion which the first control apparatus 210a transmitted, as a main response. On the other hand, the second control apparatus 210b transmits the notice of completion to the first local terminal 300a like the first control apparatus 210a.
Since the second control apparatus 210b is set as the sub-response apparatus with which the first local terminal 300a should receive a sub response, the first local terminal 300a receives the notice of completion which the second control apparatus 210b transmitted as a sub response. Thus, the configurations and operations of a plurality of control apparatuses 210 are almost the same, and each local terminal 300 can set predetermined apparatus as the main response apparatus and sub-response apparatus among a plurality of control apparatuses 210. Moreover, since the local terminal 300 sets up and recognizes apparatus , each of a plurality of control apparatuses 210 should just perform same operation.

Here, the main response apparatus and sub-response apparatus transmit the same notice of completion, and the local terminal 300 identifies each notice of completion as the main response or sub response based on the address of the control apparatus 210 which received the notice of completion. Therefore, the local terminal 300 can change whether the completion notice from any control apparatus 210 is given to the main response or the sub response, only by changing a setup in the local terminal 300.

As other embodiment, the main response apparatus may transmit the identifiable notice of completion that the notice of completion transmitted from main response apparatus is the main response, and the sub-response apparatus may transmit the identifiable notice of completion that the notice of completion transmitted from sub-response apparatus is the sub response. In this case, it can set up whether which control apparatus 210 is used as main response apparatus, and which control apparatus 210 is used as sub-response apparatus by changing a setup in the POS server 100, without changing a setup in a local terminal.

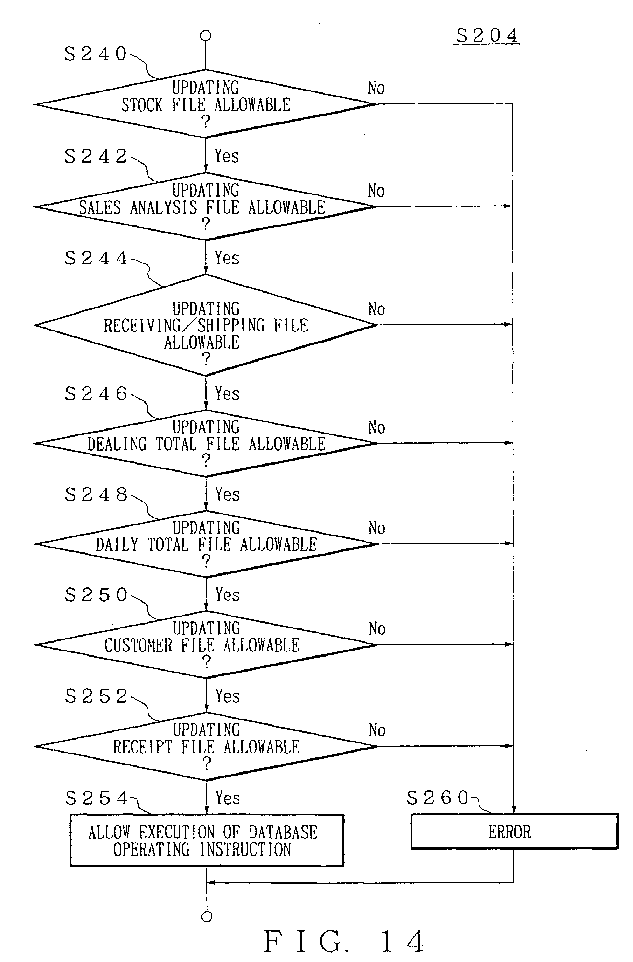

Fig. 14 is a flow chart which shows detailed operation of the first control apparatus 210a of the POS server 100 in the database updating check step (S204) shown in Fig. 13.

After the reception of a run command, the database updating device 108 checks whether the stock master file 400 can be updated.
If it is able to update (S240), the database updating device 108 checks whether sales analysis file 402 can be updated. If it is able to update (S242), the database updating device 108 checks whether the receiving/shipping file 404 can be updated. If it is able to update (S244), the database updating device 108 check whether the dealing total file 406 can be updated. If it is able to update (S246), the database updating device 108 checks whether the daily total file 408 can be updated. If it is able to update (S248), the database updating device 108 checks whether the customers file 410 can be updated. If it is able to update (S250), the database updating device 108 checks whether the receipt file 412 can be updated. If it is able to update (S252), it is judged that the received database operating instruction is possible for run (S254).

The database updating program defined beforehand is stored in the main memory 104 or BIOS-ROM106. The database updating program may be for example, a stored procedure. The database updating instruction is executed with the database operating instruction received from the local terminal 300. Next, the program is performed, the database operating instruction is changed into different contents for every file, and it is stored in each file.
Thus, different contents for every file are stored by executing one database operating instruction. The meaning that updating is possible includes adding a new file. For example, when the file in which a database operating instruction should be written does not exist, a file may newly be created and the contents of the database operating instruction may be made to reflect in the file created.

When the stock master 400 is not able to be updated by S240, when the sales analysis file 402 is not able to be updated by S242, when the receiving/shipping file 404 is not able to be updated by S244, when the dealing total file 406 is not able to be updated by S246, when the daily total file 408 is not able to be updated by S248, when the customers file 410 is not able to be updated by S250, and when the receipt file 412 is not able to be updated by S252, it is judged as an error (S260).

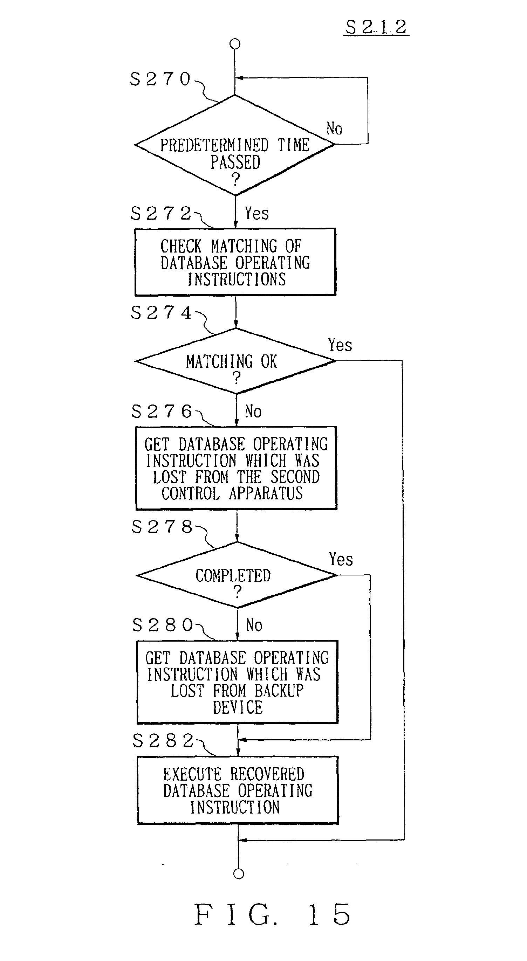

Fig. 15 is a flow chart which shows detailed operation of the first control apparatus 210a in the matching check step (S212) of the database operating instruction of Fig. 13.

If predetermined time amount passes (S270), the matching check device 156 checks the matching of the database operating instruction stored in the holding device for database operating instruction 158, and the database operating instruction stored in the holding device for database operating instruction 158 of the second control apparatus 210b (S272). When the check of the database operating instruction is able to be taken (S274), the operation of the first control apparatus 210a is ended. Thus, since the matching is checked for every predetermined time amount (i.e., since the operation of an matching check is carried out only to predetermined time amount), the first control apparatus 210a can mitigate the load of CPU 102.

When the check of the database operating instruction is not able to be taken by S274, the recovering device for database operating instruction 164 directs making a database operating instruction demand transmit to the first control apparatus 210a, to the transmitting unit between apparatuses 168. The receiving unit between apparatuses 166 receives the database operating instruction for this request (S276). When the database operating instruction is able to be received, it jumps to S282. When the database operating instruction is not able to be received by S278, the recovering device for database operating instruction 164 makes the database operating instruction transmit to the backup device 220, to the transmitting unit between apparatuses 168 (S280). On the other hand, the receiving unit between apparatuses 166 receives the database operating instruction from the backup device 220. The receiving unit between apparatuses 166 makes the received database operating instruction hold to the holding device for database operating instruction 158. Next, the database updating device 108 updates the dealing database 116 based on the recovered database operating instruction (S282).

Thus, the first control apparatus 210a can recover the database operating instruction lacked from the second local terminal 300b, even when the database operating instruction is not able to be correctly received from the first local terminal 300a.

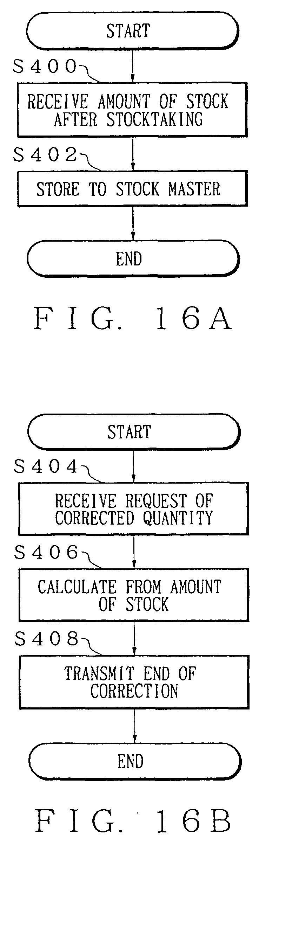

Fig. 16 is a flow chart which shows the operation of the first control apparatus 210a when stocktaking is performed at the store arranged the local terminal 300a.

The receiving device 152 of the first control apparatus 210a receives the number of right stock of each products checked by stocktaking from the local terminal 300, after stocktaking is performed at the store in which the first local terminal 300a is arranged (S400). Next, the database updating device 108 matches the amount of stock of each received products with the products identification information of each products, and stores it in the stock master 400. Moreover, the received right amount of stock is matched with products identification information by considering an operating class as stocktaking, and it stores in the receiving/shipping file 404 (S402).

The first local terminal 300a etc. may need to get to know the corrected value of the amount of stock at the time of stocktaking.
Here, the corrected value means the difference of the amount of stock which should exist now when it is computed from the quantity of the products which dealt with the quantity of products received in sale etc., and the mount of stock actually counted in stocktaking.

For example, when the corrected value demand which requires the collected value of the products at the time of stocktaking from the first local terminal 300a is received (S404), the calculating unit for correcting value 176 reads the amount of stock currently checked at the time of the last stocktaking of each products from the receiving/shipping file 404. Moreover, based on the number (the number of receiving, and sales quantity) of the products stored in the receiving of products and sale of the products after stocktaking of last time, the corrected value of the amount of stock at the time of the stocktaking is computed (S406). The corrected value may be a positive or a negative value. Next, the transmitting device 154 transmits the computed correction quantity to the first local terminal 300a (S408). The operation of the first control apparatus 210a is ended.

The receiving/shipping file 404 stores the right amount of stock checked at the time of stocktaking instead of storing the corrected value in stocktaking. The first control apparatus 210a computes a corrected value, when the corrected value demand of the amount of stock at the time of stocktaking is received. What is necessary is just to input the right selling number of the products, when it becomes clear that the number of the information stored in the receiving/shipping file 404, for example, the sold products, is not surely stored before stocktaking time, after stocktaking was performed. Then, when the corrected value of the amount of stock at the time of stocktaking is required, the corrected value is newly recomputed based on the selling number re-inputted correctly. Therefore, when the selling number is corrected, it is not necessary to change the corrected value of the amount of stock at the time of stocktaking. For this reason, the quantity of the products dealing before stocktaking can be changed easily.

Since the operation of communication of the second control apparatus 210b communicates with the first local terminal 300a is the same as operation of the first control apparatus 210a explained using Figs. 13 to 16, explanation is omitted. Moreover, the operation of the third control apparatus 210c and fourth control apparatus 210d communicating with the second local terminal 300b is the same as the operation of the first control apparatus 210a to the first local terminal 300 explained using Figs. 13 to 16.

The operation of the total control apparatus 200 communicating with the first local terminal 300a and second local terminal 300b is the same as the operation of the first control apparatus 210a explained using Figs. 13 to 16. However, in S212 of Fig. 13 , when checking the matching of the database operating instruction of the first local terminal 300a, the matching of the database operating instruction currently held at the holding device for database operating instruction 158 of the first control apparatus 210a or second control apparatus 210b and the database operating instruction held at the holding device for database operating instruction 158 of the total control apparatus 200 is checked.
Moreover, when checking the matching of the database operating instruction of the second local terminal 300b, the matching of the database operating instruction currently held at the holding device for database operating instruction 158 of the third control apparatus 210c or the 210d of the fourth control apparatus and the database operating instruction held at the holding device for database operating instruction 158 of the total control apparatus 200 is checked. If the matching of the database operating instruction can be checked by S212, the deleting device 160 of the total control apparatus 200 will delete the database operating instruction held at the holding device for database operating instruction 158. At this time, the first control apparatus 210a and second control apparatus 210b, etc., which have checked matching, may delete the database operating instruction held at the holding device for database operating instruction 158.

Thus, after the first control apparatus 210a, second control apparatus 210b, and total control apparatus 200 receive the same database operating instruction from the first local terminal 300a and check the matching of the database operating instruction between apparatuses, the database operating instruction stored in each holding device for database operating instruction 158 of the first control apparatus 210a, second control apparatus 210b, and total control apparatus 200 may be deleted. Therefore, the CPU 102 of the first control apparatus 210a, second control apparatus 210b, and total control apparatus 200 is effectively utilized.

In addition, the apparatus which checks matching is not limited to embodiments, but may check matching among the first control apparatus 210a, second control apparatus 210b, and total control apparatus 200.

As other embodiment, the database operating instruction held at the holding device for database operating instruction 158 of the total control apparatus 200 may be held, without being deleted. By this, the dealing database 116 of other total control apparatus 200 can be updated.

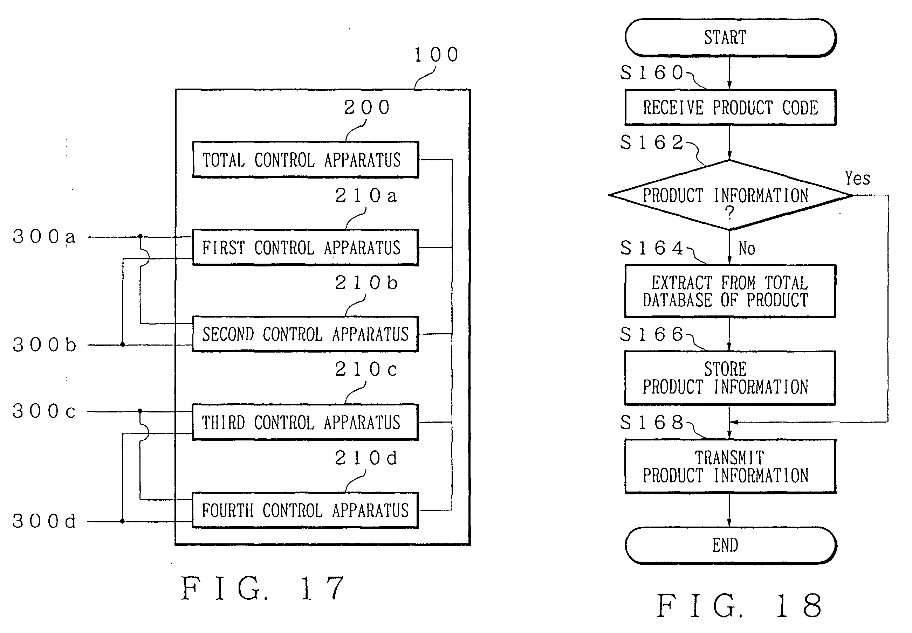

Next, the configuration and operation of the POS server 100 in the second embodiment are explained. Fig. 17 is the block diagram showing the configuration of the POS server 100 in this embodiment.
The POS server 100 has the total control apparatus 200, first control apparatus 210a, second control apparatus 210b, third control apparatus 210c, and fourth control apparatus 210d. The total control apparatus 200, first control apparatus 210a, second control apparatus 210b, third control apparatus 210c, and fourth control apparatus 210d can make a communication link with a plurality of local terminals 300 and the POS servers 100 other than this POS server 100 through the Internet 20.

The apparatus contained in the POS server 100 is set as the apparatus for the first local terminal 300a, second local terminal 300b, third local terminal 300c, and fourth local terminal 300d to transmit a database operating instruction.

The operation and function of the first control apparatus 210a and second control apparatus 210b to the first local terminal 300a are the same as those of the first control apparatus 210a and second control apparatus 210b in the first embodiment. However, the first control apparatus 210a and second control apparatus 210b receive and store the database operating instruction corresponding to dealing of products having been conducted in the second local terminal 300b, from the second local terminal 300b further. In this point, the first control apparatus 210a and second control apparatus 210b in this embodiment differ from the first control apparatus 210a and second control apparatus 210b in the first embodiment. Thus, the first control apparatus 210a and second control apparatus 210b can control the database operating instruction of a plurality of local terminals 300.

Furthermore, the second local terminal 300b sets the second control apparatus 210b as the main response apparatus, and the first control apparatus 210a as the sub-response apparatus. Therefore, if a database operating instruction is received from the second local terminal 300b, the second control apparatus 210b will transmit to the second local terminal 300b by giving the completion notice which makes the second local terminal 300b recognize completion of processing the main response information, after it processes the database operating instruction. The first control apparatus 210a transmits the notice of completion as a sub-response information to the database operating instruction received from the second local terminal 300b.

Moreover, the first control apparatus 210a functions as a backup device of the second control apparatus 210b about the database operating instruction of the second local terminal 300b.

That is, to the first local terminal 300a, the first control apparatus 210a and second control apparatus 210b is set as the main response apparatus and the sub-response apparatus, respectively. The second control apparatus 210b functions as a backup device of the first control apparatus 210a about the database operating instruction of the first local terminal 300a.
On the other hand, to the second local terminal 300b, the second control apparatus 210b and first control apparatus 210a is set as the main response apparatus and sub-response apparatus, respectively. The first control apparatus 210a functions as a backup device of the second control apparatus 210b about the database operating instruction of the first local terminal 300b.

Thus, processing of the POS server 100 can be distributed by giving the function as main response apparatus and as a backup device to a plurality of control apparatuses for each local terminal 300. Therefore, the POS server 100 can process information efficiently, when information is received.

Since the configuration of the third control apparatus 210c and fourth control apparatus 210d and its operation to the third local terminal 300c and fourth local terminal 300d are the same as the configuration of the first control apparatus 210a and second control apparatus 210b and its operation to the first local terminal 300a and second local terminal 300b, explanation is omitted.

The total control apparatus 200 receives and controls the database operating instruction, which the first control apparatus 210a and second control apparatus 210b received from the first local terminal 300a and second local terminal 300b, from at least one of the first control apparatus 210a and second control apparatus 210b. The total control apparatus 200 receives and manages the database operating instruction, which the third control apparatus 210c and fourth control apparatus 210d received from the third local terminal 300c and fourth local terminal 300d, from at least one of the third control apparatus 210c and fourth control apparatus 210d. That is, the total control apparatus 200 controls the database operating instruction received from all the local terminals 300 that the POS server 100 controls.

Since the constitution of the POS server 100 other than this is the same as that of the configuration of the POS server 100 explained in the first embodiment using Figs 4 to 9, explanation is omitted.

As other embodiment, the total control apparatus 200 may receive the database operating instruction of each local terminal 300 from the main response apparatus of each local terminal 300.

In this embodiment, the main response apparatus and sub-response apparatus are identified with the address of the control apparatus 210 set in the local terminal 300. Therefore, by setting different control apparatus 210 in the local terminal 300 as the main response apparatus and sub-response apparatus, respectively, a certain control apparatus 210 can operate as the main response apparatus to some local terminals 300 and as the sub-response apparatus to other local terminals 300.

As other embodiment, the main response apparatus may transmit the notice of completion for it being the main response to the local terminal 300 identifiable only to the specific local terminal 300. For example, the identification information which identifies the local terminal 300 to be recognized as the main response may be given to the notice of completion, and be transmitted to all the local terminals 300. In this case, the local terminal 300 which received the notice of completion judges whether the identification information which identifies the local terminal 300 of self is given to the notice of completion. When the identification information of the local terminal 300 of self is given, the notice of completion is dealt with as a main response, and when identification information is not given, the notice of completion is dealt with as a sub-response.

That is, the local terminal 300 or the POS server 100 may set up whether which control apparatus 210 is used as the main response apparatus which transmits the main response, and which control apparatus 210 is used as the sub-response apparatus which transmits the sub-response.

Fig. 18 is a flow chart of detailed operation when the POS server 100 receives a bar code from the first local terminal 300a. In this POS server 100, the first control apparatus 210a receives a database operating instruction through the Internet 20 from the local terminal 300, while the total control apparatus 200 receives a database operating instruction from the control apparatus 210.

First, the receiving device 152 of the first control apparatus 210a receives products information requirements (S160). Next, the detecting unit 172 detects the products information corresponding to the products information requirements received, from the stock master file 400. When the products information is stored in the stock master file 400 (S162), it jumps to S168.

By S162, when the products information is not stored in the stock master file 400, the extracting unit 174 transmits the products information requirements to the total control apparatus 200 through the transmitting unit between apparatuses 168. The extracting unit 174 acquires the products information stored in the stock master file 400 of the total control apparatus 200 through the receiving unit between apparatuses 166 (S164). Next, the database updating device 108 newly registers into the stock master file 400 of the first control apparatus 210a the products information which the extracting unit 174 acquired (S166). Next the transmitting device 154 transmits the products information which the extracting unit 174 acquired, to the first local terminal 300a (S168). The amount of stock of products is also transmitted at this time. Thus, since the stock master file 400 stores products information and amount of stock matching with the products identification information of products, the POS server 100 can provide coincidence with the products information and the amount of stock. Then, the operation of the first control apparatus 210a when receiving products information requirements is ended.

Thus, when the products information requirements of the products information which is not stored in the first control apparatus 210a are received, the products information corresponding to products information requirements can be extracted from the total control apparatus 200. Therefore, the first control apparatus 210a store only the products information on the products sold at the store which the first control apparatus 210a controls. Thus, memory can be used efficiently.

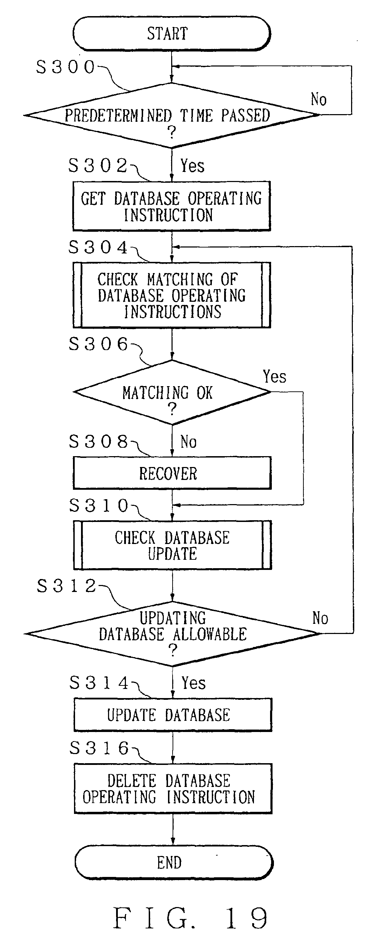

Fig. 19 is a flow chart of detailed operation of the total control apparatus 200 when receiving a database operating instruction from the first control apparatus 210a in this embodiment. When the timer 170 counts predetermined time amount (S300), the receiving unit between apparatuses 166 of the total control apparatus 200 receives a database operating instruction from the first control apparatus 210a (S302). Thus, since a database operating instruction is received for every predetermined time amount, CPU 102 can be used efficiently.

Next, the matching check device 156 checks the matching of the received database operating instruction and the database operating instruction which the first control apparatus 210a holds (S304). When the matching of the database operating instruction is not able to be checked (S306), the recovering device for database operating instruction 164 recovers the lacked database operating instruction (S308). By S306, when the matching of a database operating instruction is able to be checked, it jumps to S310.

As other embodiment, the total control apparatus 200 may receive a database operating instruction from the second control apparatus 210b. The total control apparatus 200 needs to receive the database operating instruction transmitted from the first local terminal. The total control apparatus 200 may receive the database operating instruction from either the first control apparatus 210a or second control apparatus 210b.

Next, it checks whether renewal of the dealing database 116 is possible (S310). When the renewal of the dealing database 116 is possible, all the files stored in the dealing database 116 are updated (S314). Next, the deleting device 160 deletes the database operating instruction received from the first control apparatus 210a (S316). Thus, if the renewal of the dealing database 116 is completed, the database operating instruction is deleted and the memory of each apparatus can be used efficiently.

Since the detailed operation of the total control apparatus 200 in S304 is the same as the operation of the first control apparatus 210a in S212 explained using Fig. 15 , explanation is omitted. Moreover, since the detailed operation of the total control apparatus 200 in S310 is the same as the operation of the first control apparatus 210a in S204 explained using Fig. 14, explanation is omitted.

Since the operation of POS server 100 other than this is the same as the operation of the POS server 100 explained using Figs. 13 to 16 in the first embodiment, explanation is omitted.

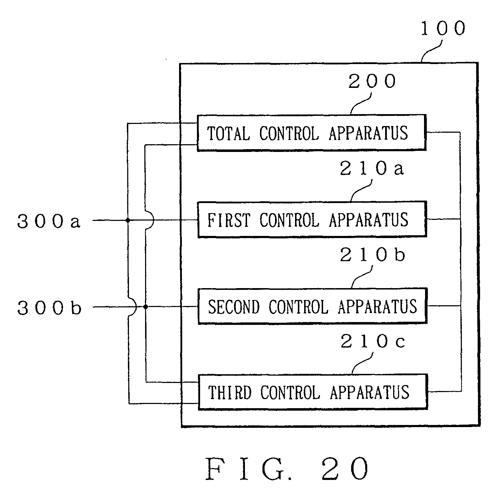

Fig. 20 is the block diagram showing the configuration of the POS server 100 in the third embodiment. The POS server 100 of this embodiment has the total control apparatus 200, first control apparatus 210a, second control apparatus 210b, and third control apparatus 210c. All of the total control apparatus 200, first control apparatus 210a, second control apparatus 210b, and third control apparatus 210c are capable of communicating with a plurality of local terminals 300 and POS servers 100 other than this POS server 100, through the Internet 20.

The first control apparatus 210a and second control apparatus 210b receive and store a database operating instruction from the first local terminal 300a and second local terminal 300b, respectively. The first control apparatus 210a and second control apparatus 210b are set as the main response apparatus of the first local terminal 300a and second local terminal 300b, respectively.

The third control apparatus 210c receives and stores the database operating instruction of the first local terminal 300a and second local terminal 300b. The third control apparatus 210c is set as the sub-response apparatus of the first local terminal 300a and second local terminal 300b. The third control apparatus 210c also functions as a backup device of the first control apparatus 210a and second control apparatus 210b.

Thus, since different control apparatus 210 is made to distribute the function as main response apparatus, the main response apparatus can transmit the notice of completion to real time.

The total control apparatus 200 receives and stores a database operating instruction from the first local terminal 300a and second local terminal 300b.

Since the configuration and operation of POS server 100 other than this are the same as the configuration of the POS server 100 explained by Figs. 4 to 9 and Figs. 13 to 16 in the first embodiment, explanation is omitted.

As other embodiment, the POS server 100 of the first to third embodiments may further have the control apparatus 210 which functions as a backup device. The hardware configuration of the control apparatus 210 which functions as a backup device is explained. The hardware configuration is the same as the configuration of the control apparatus 210 explained using Figs. 5 to 9. However, the backup device 220 may not have the stock master file 400 and also database other than this. At this point, the internal configuration of the backup device 220 differs from the internal configuration of the control apparatus 210. Moreover, in this case, the backup unit 220 has the holding device for database operating instruction holding a database operating instruction, holds the received database operating instruction, and transmits a database operating instruction to the first control apparatus 210a, second control apparatus 210b, and total control apparatus 200 according to a request.

As other embodiment, the backup device 220 may have only the receiving device 152, transmitting device 154, receiving unit between apparatuses 166, transmitting unit between apparatuses 168, and holding device for database operating instruction 158.
By this, the backup device 220 can receive a database operating instruction, and can provide other control apparatus 210 with a database operating instruction.

The software which the CPU 102 of the POS server 100 performs may be stored in recording media, such as a floppy (registered trademark) disk or CD-ROM, and a user may be provided with it.
Moreover, the software which the CPU 302 of the local terminal 300 performs may be stored in recording media, such as a floppy disk or CD-ROM, and a user may be provided with it. Each of software stored in the recording media may be compressed, or may be incompressible. Each software is installed in a hard disk drive from the recording media, and is read into the main memory 104 and main memory 304, respectively, and it is performed by the CPU 102 and CPU 302.

The software, which is realized in the local terminal 300 of the embodiment, installed in a hard disk drive, has an input module, dealing processing module, database operating instruction generating module, duplicate module, destination grant module, transmitting module, receiving module, and output module as a functional configuration. Since the operation of each module is the same as the operation of the processing unit 350 explained by Fig. 3, explanation is omitted.

The software, which is realized in the first control apparatus 210a of the embodiment, installed in a hard disk drive, has a receiving module, transmitting module, matching check module, database operating instruction recovering module, deleting module, database updating module, receiving between apparatuses module, transmitting between apparatuses module, and timer module as a functional configuration. Since the operation of each module is the same as the operation of the database operating instruction management unit 150 explained by Fig. 6 , explanation is omitted.

A part or all functions of operations in the POS server 100 and the local terminal 300 concerning all the embodiments explained with this application are storable, as an example of the recording media, in the floppy disk or CD-ROM.

These programs may be directly read in RAM from the recording media and prosecuted, or read in RAM after installing a hard disk drive. Furthermore, the above-mentioned program may be stored in a single recording medium, or it may be stored in a plurality of recording media. Moreover, it may be stored with encoded configuration.

As a recording medium, besides floppy disk and CD-ROM, optical record media, such as DVD, magnetic-recording media, such as MD, magneto-optic-recording media, such as PD, tape data media, magnetic-recording data media, semiconductor memory, such as IC card and a miniature card and the like can be used. A hard disk or RAM provided in the server system, which is connected to a dedicated communication network or the Internet 20, may be used as a recording medium, and the POS server 100 and local terminal 300 may be provided with a program through a communication network.
It is clear that these recording media are used only for manufacturing the POS server 100 and local terminal 300. Manufacture and sale etc. of these recording media constitute infringement of the patent right of this application.

Although this invention was explained using the embodiments, the technical scope of this invention is not limited to a range given in the above-mentioned embodiments. Various modifications or improvements can be added to the above-mentioned embodiments. It is clear from the description of claims that the embodiments added such modification or improvements may also be contained in the technical scope of this invention.

As the first example of modification, in the control apparatus 210 of the POS server 100 of the embodiment, when the first control apparatus 210a is set as the main response apparatus and the second control apparatus 210b is set as the sub-response apparatus for example, to the first local terminal 300a, the second control apparatus 210b functions as a backup device of the first control apparatus 210a. Thus, the control apparatus 210 set as the main response apparatus to a predetermined local terminal 300, transmits the notice of completion as the main response, when received the database operating instruction from the local terminal 300. The control apparatus 210 set as the sub-response apparatus transmits the notice of completion as the sub-response, and functions as a backup device of the main response apparatus.
Instead of this, for example, if the first control apparatus 210a is set as the main response apparatus to the first local terminal 300a and the second control apparatus 210b is set as the sub-response apparatus, the first control apparatus 210a may function as a backup device of the second control apparatus 210b.

As the second example of modification, each control apparatus 210 ,which the POS server has, may control any local terminal 300, and the number of the control apparatus 210, which the POS server 100 has, is not limited to the present embodiments.

For example, when the number of the local terminals 300 which the POS server 100 controls increases, and when the amount of data of the information stored in the dealing database 116 of the POS server 100 increases, the POS server 100 may have five or more control apparatuses 210. For example, the POS server 100 may be further equipped with fifth control apparatus 210e. The fifth control apparatus 210e may control the local terminals 300 other than the first local terminal 300a and second local terminal 300b.

Thus, since the number of the control apparatus 210 which the POS server 100 has can be changed, according to the number of the local terminals 300 which the POS server 100 controls, the communication link frequency with the local terminal 300, and the amount of data that communicates, the number of the control apparatus 210 can be set up freely. That is, the POS server 100 can be built according to the scale of each store. Moreover, in this way, since the number of control apparatus 210 can be changed freely, when the load of each control apparatus 210 becomes large, the control apparatus 210 can be extended and the load of each control apparatus 210 can be mitigated.

Moreover, for example, when there are few local terminals 300 to control, or when the communication link frequency is low, the POS server 100 may have only the first control apparatus 210a and second control apparatus 210b. Thus, in the case of the POS server 100 which controls a comparatively small-scale store, only one computer and one backup computer are able to perform.

In the second embodiment, although the total control apparatus 200 received the database operating instruction from either the first control apparatus 210a or second control apparatus 210b received from the first local terminal 300a. In stead of this, as the third example of modification, the total control apparatus 200 may receive the database operating instruction from both the first control apparatus 210a and second control apparatus 210b.
In this case, the matching check device 156 of the total control apparatus 200 checks the matching of the database operating instruction received from the first control apparatus 210a and second control apparatus 210b.

In the present embodiment, the matching of a database operating instruction was checked after updating the dealing database 116 when the database updating device 108 of the first control apparatus 210a received the database transmitting instruction as explained using Figs. 13 to 15. As the fourth example of modification, after the matching check device 156 of the first control apparatus 210a checks matching, the dealing database 116 may be updated based on the database operating instruction.

As the fifth example of modification, the POS server 100 may have only the first control apparatus 210a and the backup device 220. In this case, the first local terminal 300a receives two database operating instructions with the address of the first control apparatus 210a and one database operating instruction with the address of the backup device 220 from the first local terminal 300a. The first control apparatus 210a may check the matching of two database operating instructions received from the first local terminal 300a, and may recover the lacked database operating instruction. In this case, the first local terminal 300a may transmit two database operating instructions to the POS server 100 in a different path through the Internet 20. Even when one does not reach the POS server 100 correctly by this, it can recover the database operating instruction of another.

### Effect of the Invention

According to this invention, clearly from the above-mentioned explanation, a POS server can response immediately to a demand from a local terminal. Moreover, a low cost POS system can be offered.

## Claims

1. A POS server controlling a plurality of local terminals arranged at a plurality of stores, said POS server comprising: a first and a second control apparatus, each of which receives and stores dealing information that products dealing has been made at a first local terminal, from the first local terminal of said local terminals, and notifies the first local terminal of receiving said dealing information.

2. The POS server according to claim 1, wherein said second control apparatus provides said dealing information to said first control apparatus when said dealing information of said first local terminal was not stored correctly in said first control apparatus.

3. The POS server according to claim 1 or 2, further comprising
a third control apparatus which receives dealing information that products dealing has been made at a second local terminal different from said first local terminal, stores the dealing information therein, and notifies said second local terminal of receiving the dealing information; and
said second control apparatus receives and stores said dealing information on said second local terminal from said second local terminal, and notifies that said dealing information was received to said second local terminal.

4. The POS server according to claim 3, wherein said second control apparatus provides said dealing information to said third control apparatus when said dealing information of said second local terminal was not stored correctly in said third control apparatus.

5. The POS server according to claim 3 or 4, wherein said second control apparatus transmits said dealing information which said demand shows to said local terminal, when a demand of information about said dealing information other than the local terminal concerned is received from a predetermined local terminal among said plurality of local terminals.

6. The POS server according to any of claims 3 to 5, further comprising:
a fourth control apparatus receiving and storing said dealing information on said first local terminal from said first local terminal, and notifying receiving said dealing information to said first local terminal and providing said first control apparatus with said dealing information when said dealing information of said first local terminal is not correctly stored in said first control apparatus; and
a fifth control apparatus receiving and storing said dealing information on said second local terminal from said second local terminal, and notifying receiving said dealing information to said second local terminal and providing said first control apparatus with said dealing information when said dealing information of said second local terminal is not correctly stored in said third control apparatus.

7. The POS server according to claim 4, further comprising said fourth control apparatus receiving and storing said dealing information from each of said first local terminal and said second local terminal, wherein said fourth control apparatus transmits said dealing information shown by said demand to said local terminal, when a demand of information about said dealing information other than the local terminal concerned is received from a predetermined local terminal among said plurality of local terminals.

8. The POS server according to claim 1 or 2, wherein said first and second control apparatus receive and store dealing information which shows that products dealing were conducted in said second local terminal among a plurality of local terminals from said second local terminal respectively, and notify that said dealing information was received, to said second local terminal.

9. The POS server according to claim 8, wherein said second control apparatus provides said first control apparatus with said dealing information, when said dealing information on said first local terminal is not correctly stored in said first control apparatus, and wherein said first control apparatus provides said second control apparatus with said dealing information, when said dealing information on said second local terminal is not correctly stored in said second control apparatus.

10. The POS server according to claim 1 or 2; further comprising
said third and fourth control apparatus which has the same function as said first and second control apparatus arranged by receiving and storing dealing information which shows that products dealing were conducted in said third and fourth local terminal among a plurality of local terminals, and said fifth control apparatus which receives and stores said dealing information on said first local terminal at least one from said first and second control apparatus, and receives and stores said dealing information on said second local terminal at least one from said third and fourth control apparatus.

11. The POS server according to claim 10, wherein, when a demand of information about said dealing information other than the local terminal concerned is received from a predetermined local terminal among said plurality of local terminals, said fifth control apparatus transmits said dealing information which said demand shows to said local terminal.

12. The POS server according to claim 8 or 9, further comprising:
said third and fourth control apparatus which has the same function as said first and second control apparatus arranged by receiving and storing dealing information which shows that products dealing were conducted in said third and fourth local terminal of a plurality of local terminals; and
said fifth control apparatus which receives and stores said dealing information on said first local terminal at least one from said first and second control apparatus, which receives and stores said dealing information on said first local terminal at least one from said first and second control apparatus, which receives and stores said dealing information on said third local terminal at least one from said third and fourth control apparatus, and which receives and stores said dealing information on said fourth local terminal at least one from said third and fourth control apparatus.

13. The POS server according to claim 12, wherein, when a demand of information about said dealing information other than the local terminal concerned is received from a predetermined local terminal among said plurality of local terminals, said fifth control apparatus transmits said dealing information which said demand shows to said local terminal.

14. The POS server according to any of claims 1 to 12; wherein said first control apparatus transmits a main response information which makes said first local terminal recognize completion of said processing to said first local terminal, after processing said dealing information received from said first local terminal, and wherein said second control apparatus transmits a sub-response information which makes said first local terminal recognize having completed processing of said dealing information to said first local terminal, when said main response information is not transmitted to said first local terminal from said first control apparatus, after processing said dealing information received from said first local terminal.

15. The POS server according to any of claims 3 to 7, wherein said first control apparatus transmits a main response information which makes said first local terminal recognize completion of said processing to said first local terminal, after processing said dealing information received from said first local terminal, wherein said third control apparatus transmits a main response information which makes said second local terminal recognize completion of said processing to said second local terminal, after processing said dealing information received from said second local terminal, wherein said second control apparatus transmits a sub-response information which makes said first local terminal recognize having completed processing of said dealing information to said first local terminal, when said main response information is not transmitted to said first local terminal from said first control apparatus, after processing said dealing information received from said first local terminal, and transmit a sub-response information which makes said second local terminal recognize having completed processing of said dealing information to said second local terminal, when said main response information is not transmitted to said second local terminal from said third control apparatus, after processing said dealing information received from said second local terminal.

16. The POS server according to claim 6;
wherein said first control apparatus transmits a main response information which makes said first local terminal recognize completion of said processing to said first local terminal, after processing said dealing information received from said first local terminal,
wherein said fourth control apparatus transmits a sub-response information which makes said first local terminal recognize having completed processing of said dealing information to said first local terminal, when said main response information is not transmitted to said first local terminal from said first control apparatus, after processing said dealing information received from said first local terminal,
wherein said third control apparatus transmits a main response information which makes said second local terminal recognize completion of said processing to said second local terminal, after processing said dealing information received from said second local terminal,
and wherein said fifth control apparatus transmits a sub-response information which makes said second local terminal recognize having completed processing of said dealing information to said second local terminal, when said main response information is not transmitted to said second local terminal from said third control apparatus, after processing said dealing information received from said second local terminal.

17. The POS server according to claim 8 or 9;
wherein said first control apparatus transmits a main response information which makes said first local terminal recognize completion of said processing to said first local terminal, after processing said dealing information received from said first local terminal,
wherein said second control apparatus transmits a sub-response information which makes said first local terminal recognize having completed processing of said dealing information to said first local terminal, when said main response information is not transmitted to said first local terminal from said first control apparatus, after processing said dealing information received from said first local terminal,
wherein said second control apparatus transmits a main response information which makes said second local terminal recognize completion of said processing to said second local terminal, after processing said dealing information received from said second local terminal,
and wherein said first control apparatus transmits a sub-response information which makes said second local terminal recognize having completed processing of said dealing information to said second local terminal, when said main response information is not transmitted to said second local terminal from said second control apparatus, after processing said dealing information received from said second local terminal.

18. The POS server according to claim 10 or 11;
wherein said first control apparatus transmits a main response information which makes said first local terminal recognize completion of said processing to said first local terminal, after processing said dealing information received from said first local terminal,
wherein said second control apparatus transmits a sub-response information which makes said first local terminal recognize having completed processing of said dealing information to said first local terminal, when said main response information is not transmitted to said first local terminal from said first control apparatus, after processing said dealing information received from said first local terminal,
wherein said third control apparatus transmits a main response information which makes said second local terminal recognize completion of said processing to said second local terminal, after processing said dealing information received from said second local terminal,
and wherein said fourth control apparatus transmits a sub-response information which makes said second local terminal recognize having completed processing of said dealing information to said second local terminal, when said main response information is not transmitted to said second local terminal from said second control apparatus, after processing said dealing information received from said second local terminal.

19. A local terminal connected to the POS server which controls sales of products in a plurality of stores comprising:
an input unit of products identification information of the dealing;
a dealing management unit which performs processing about dealing of said products corresponding to said inputted products identification information;
a generating unit for dealing information which generates dealing information which shows the processing about said dealing;
a copy unit which copies said dealing information;
a transmitting unit which transmits said a plurality of copied dealing information;
a receiving unit which receives the response to either of said plurality of dealing information transmitted, wherein
said transmitting unit retransmits said dealing information in the requirement of not receiving said response.

20. The local terminal according to claim 19, further comprising an addressing unit which gives different address to a plurality of said dealing information copied by said copy unit, and wherein said transmitting unit transmits a plurality of said dealing information with address given by said addressing unit, and said transmitting unit retransmits said dealing information in the requirement for said receiving section not receiving said response to any of a plurality of said dealing information transmitted.

21. The local terminal according to claim 20, said POS server comprising: a local terminal main control apparatus which receives said dealing information of said local terminal and transmits the response to said dealing information to said local terminal; and
a local terminal sub-control apparatus which transmits the response to said dealing information to said local terminal when said dealing information is received and said local terminal main control apparatus does not transmit said response, and wherein said addressing unit gives address of said local terminal main control apparatus and said local terminal sub-control apparatus to said two dealing information, and said transmitting unit retransmits said dealing information in the requirement of not receiving said response from said local terminal main control apparatus.

22. The local terminal according to claim 21, wherein said transmitting unit retransmits said dealing information by making into a requirement for predetermined time amount to pass after said transmitting unit transmits said dealing information, and for said receiving unit not to receive said response from said local terminal sub-control apparatus in the condition of not receiving said response from said local terminal main control apparatus.

23. The local terminal according to claim 22, wherein
in the condition of not receiving said response from said local terminal, when said transmitting unit transmits said dealing information, predetermined time amount passes, said receiving unit receives said response from said local terminal sub-control apparatus, and said transmitting unit transmits said dealing information next time, said transmitting unit retransmits said dealing information by making for said local terminal sub-control apparatus to have not received said response into a requirement.

24. The local terminal according to claim 23, wherein in the condition of not receiving said response from said local terminal, when said transmitting unit transmits said dealing information, predetermined time amount passes, said receiving unit receives said response from said local terminal sub-control apparatus, and said transmitting unit transmits said dealing information next time, said transmitting unit retransmits said dealing information under the conditions that
said local terminal sub-control apparatus does not receive said response, predetermined time amount passes after said transmitting unit transmits said dealing information, and said receiving unit does not receive said response from said local terminal sub-control apparatus.

25. The local terminal according to claim 23 or 24, wherein
in the condition of not receiving said response from said local terminal, when said transmitting unit transmits said dealing information, predetermined time amount passes, said receiving unit receives said response from said local terminal sub-control apparatus, and said transmitting unit transmits said dealing information next time, said transmitting unit retransmits said dealing information under the condition that said local terminal sub-control apparatus does not receive said response, predetermined time amount passes after said transmitting unit transmits said dealing information, and said receiving unit does not receive said response from said local terminal main control apparatus, and the condition that said transmitting unit transmits said dealing information, said local terminal is restarted, and said receiving unit does not receive said response from said local terminal main control apparatus.

26. The local terminal according to any of claims 19 to 25, wherein said local terminal sub-control apparatus stores said dealing information on the local terminal which said POS server controls, when said transmitting unit transmits a demand of said dealing information received and stored from local terminals other than the local terminal concerned among said local terminals which said POS server controls, with a necessary condition of not receiving said response from said local terminal sub-control apparatus, said transmitting unit retransmits said demand.

27. A POS system equipped with said POS server which controls products dealing in a plurality of stores and the local terminals arranged in said stores, comprising:
said first local terminal of a plurality of said local terminals having an input unit which inputs the products identification information of the products to be dealt, a dealing management unit which performs processing about dealing of said products corresponding to said inputted products identification information, a generating unit for dealing information which generates the dealing information which shows the processing about said dealing, a copy unit which copies said dealing information, a transmitting unit which transmits said plurality of copied dealing information; and
said POS server having said first control and second control apparatus which receive and store the same dealing information showing products dealing conducted in said first local terminal among said plurality of local terminals, from said first local terminal, and notify that said dealing information was received to said first local terminal, respectively,
further a receiving unit which receives said notice which shows the response to either of said plurality of dealing information transmitted, and said transmitting unit of said first local terminal retransmits said dealing information with a necessity condition of not receiving said response.

28. A dealing control method which controls dealing of products in a plurality of local terminals arranged in a plurality of stores on said POS server, comprising:
a storing step of receiving and storing a plurality of same dealing information showing that products dealing were conducted in said first local terminal of said plurality of local terminals, from said first local terminal; and
a step of notifying to said first local terminal that said dealing information was received, after said storing step.

29. The dealing control method to control said products dealing using said POS server which controls products dealing in a plurality of stores, comprising:
a step of inputting the products identification information for dealing;
a step of performing processing about dealing of said products corresponding to said inputted products identification information;
a step for generating the dealing information which shows the processing about said dealing;
a step of copying said dealing information;
a step of transmitting said plurality of copied dealing information;
a step of receiving the response to either of said plurality of dealing information transmitted; and
a step of re-transmitting said dealing information by making not to receive said response into a requirement

30. A recording medium which stores the program for computers which controls products dealing in a plurality of local terminals arranged in a plurality of stores on said POS server, comprising:
a storing module which receives and stores a plurality of same dealing information showing that dealing of the products were conducted in said first local terminal of said plurality of local terminals, from said first local terminal; and
a notice module notifying that said dealing information was received, to said first local terminal.

31. The recording medium which stores the program for the local terminals connected to said POS server which controls products dealing in a plurality of stores, comprising:
an input module which inputs the products identification information of products to be dealt;
a dealing processing module which performs processing about dealing of said products corresponding to said inputted products identification information;
a generating module for dealing information which generates the dealing information which shows the processing about said dealing;
a copy module which copies said dealing information;
a transmitting module which transmits said plurality of copied dealing information;
a receiving module which receives the response to either of said plurality of dealing information transmitted; and
a re-transmitting module which retransmits said dealing information by making not to receive said response into a requirement.
